# EUROPEAN PATENT APPLICATION

(11) **EP 4 788 049 A1**
(43) Date of publication of application: **05.08.2026**
(21) Application number: 24872905.5
(22) Date of filing: 25.09.2024
(51) Int. Cl.: H04W 76/22, H04W 28/02, H04W 80/02, H04W 88/12, H04L 45/24, H04L 47/32, H04L 47/34

(54) **MULTI-PATH-BASED COMMUNICATION**

(30) Priority: 27.09.2023 US 202363540664 P
(71) Applicant: LG Electronics Inc., Yeongdeungpo-gu Seoul 07336 (KR)
(72) Inventor: KIM, Seokjung, Seoul 06772 (KR); BYUN, Daewook, Seoul 06772 (KR); HAN, Jaemin, Seoul 06772 (KR)
(74) Representative: Frenkel, Matthias Alexander
(86) International application number: PCT/KR2024/014488
(87) International publication number: WO 2025/071197

(57) **Abstract**

Provided in one embodiment in the present disclosure is a method. The method may comprise the steps of: receiving a bearer context modification request message from a CU-CP; transmitting a bearer context modification response message to the CU-CP; receiving a downlink data transfer status frame from a DU; and determining whether to transmit, to the DU, information for discarding downlink data related to a DDDS frame.

## Description

### TECHNICAL FIELD

The present specification relates to a radio communication.

### BACKGROUND ART

3rd Generation Partnership Project (3GPP) Long-Term Evolution (LTE) is a technology for enabling high-speed packet communications. Many schemes have been proposed for the LTE objective including those that aim to reduce user and provider costs, improve service quality, and expand and improve coverage and system capacity. The 3GPP LTE requires reduced cost per bit, increased service availability, flexible use of a frequency band, a simple structure, an open interface, and adequate power consumption of a terminal as an upper-level requirement.

Work has started in International Telecommunication Union (ITU) and 3GPP to develop requirements and specifications for New Radio (NR) systems. 3GPP has to identify and develop the technology components needed for successfully standardizing the new RAT timely satisfying both the urgent market needs, and the more long-term requirements set forth by the ITU Radio communication sector (ITU-R) International Mobile Telecommunications (IMT)-2020 process. Further, the NR should be able to use any spectrum band ranging at least up to 130 GHz that may be made available for wireless communications even in a more distant future.

The NR targets a single technical framework addressing all usage scenarios, requirements and deployment scenarios including enhanced Mobile BroadBand (eMBB), massive Machine Type Communications (mMTC), Ultra-Reliable and Low Latency Communications (URLLC), etc. The NR shall be inherently forward compatible.

There is a problem that a multi-path operation, including a direct path in which a UE is directly connected to a base station and an indirect path in which the UE is connected to the base station through a Relay UE, is not effectively supported.

### DISCLOSURE

### TECHNICAL SOLUTION

According to an embodiment of the present specification, a method is provided. The method may include receiving a bearer context modification request message from a CU-CP; transmitting a bearer context modification response message to the CU-CP; receiving a downlink data delivery status (DDDS) frame from a DU; and determining whether to transmit information for discarding downlink data related to the DDDS frame to the DU.

According to an embodiment, an apparatus implementing the method is provided.

According to an embodiment of the present specification, a method is provided. The method may include transmitting a bearer context modification request message to a CU-UP; and receiving a bearer context modification response message from the CU-UP.

### BRIEF DESCRIPTION OF THE DRAWINGS

FIG. 1 shows an example of a communication system to which implementations of the present disclosure is applied.
FIG. 2 shows an example of wireless devices to which implementations of the present disclosure is applied.
FIG. 3 shows an example of UE to which implementations of the present disclosure is applied.
FIG. 4 shows an example of 5G system architecture to which implementations of the present disclosure is applied.
FIG. 6a shows a first example in which service is provided to a UE through two paths. FIG. 6b shows a second example in which service is provided to a UE through two paths. FIG. 6c shows a third example in which service is provided to a UE through two paths. FIG. 6d shows a fourth example in which service is provided to a UE through two paths.
FIGS. 7a and 7b show an example of an indirect path addition procedure according to the first example of the present disclosure.
FIGS. 8a and 8b show an example of a direct path addition procedure according to the second example of the present disclosure.
FIGS. 9a and 9b are an example of inter-DU direct path addition according to an embodiment of the present disclosure.
FIGS. 10a and 10b are an example of inter-DU indirect path addition according to an embodiment of the present disclosure.
FIG. 11 is an example of intra-DU direct path addition according to an embodiment of the present disclosure.
FIG. 12 is an example of intra-DU indirect path addition according to an embodiment of the present disclosure.
FIG. 13 shows an example of a procedure according to an embodiment of the present disclosure.

### MODE FOR INVENTION

The following techniques, apparatuses, and systems may be applied to a variety of wireless multiple access systems. Examples of the multiple access systems include a Code Division Multiple Access (CDMA) system, a Frequency Division Multiple Access (FDMA) system, a Time Division Multiple Access (TDMA) system, an Orthogonal Frequency Division Multiple Access (OFDMA) system, a Single Carrier Frequency Division Multiple Access (SC-FDMA) system, and a Multi Carrier Frequency Division Multiple Access (MC-FDMA) system. CDMA may be embodied through radio technology such as Universal Terrestrial Radio Access (UTRA) or CDMA2000. TDMA may be embodied through radio technology such as Global System for Mobile communications (GSM), General Packet Radio Service (GPRS), or Enhanced Data rates for GSM Evolution (EDGE). OFDMA may be embodied through radio technology such as Institute of Electrical and Electronics Engineers (IEEE) 802.11 (Wi-Fi), IEEE 802.16 (WiMAX), IEEE 802.20, or Evolved UTRA (E-UTRA). UTRA is a part of a Universal Mobile Telecommunications System (UMTS). 3rd Generation Partnership Project (3GPP) Long-Term Evolution (LTE) is a part of Evolved UMTS (E-UMTS) using E-UTRA. 3GPP LTE employs OFDMA in downlink (DL) and SC-FDMA in uplink (UL). Evolution of 3GPP LTE includes LTE-Advanced (LTE-A), LTE-A Pro, and/or 5G New Radio (NR).

For convenience of description, implementations of the present disclosure are mainly described in regards to a 3GPP based wireless communication system. However, the technical features of the present disclosure are not limited thereto. For example, although the following detailed description is given based on a mobile communication system corresponding to a 3GPP based wireless communication system, aspects of the present disclosure that are not limited to 3GPP based wireless communication system are applicable to other mobile communication systems.

For terms and technologies which are not specifically described among the terms of and technologies employed in the present disclosure, the wireless communication standard documents published before the present disclosure may be referenced.

In the present disclosure, "A or B" may mean "only A", "only B", or "both A and B". In other words, "A or B" in the present disclosure may be interpreted as "A and/or B". For example, "A, B or C" in the present disclosure may mean "only A", "only B", "only C", or "any combination of A, B and C".

In the present disclosure, slash (/) or comma (,) may mean "and/or". For example, "A/B" may mean "A and/or B". Accordingly, "A/B" may mean "only A", "only B", or "both A and B". For example, "A, B, C" may mean "A, B or C".

In the present disclosure, "at least one of A and B" may mean "only A", "only B" or "both A and B". In addition, the expression "at least one of A or B" or "at least one of A and/or B" in the present disclosure may be interpreted as same as "at least one of A and B".

In addition, in the present disclosure, "at least one of A, B and C" may mean "only A", "only B", "only C", or "any combination of A, B and C". In addition, "at least one of A, B or C" or "at least one of A, B and/or C" may mean "at least one of A, B and C".

Also, parentheses used in the present disclosure may mean "for example". In detail, when it is shown as "control information (PDCCH)", "PDCCH" may be proposed as an example of "control information". In other words, "control information" in the present disclosure is not limited to "PDCCH", and "PDCCH" may be proposed as an example of "control information". In addition, even when shown as "control information (i.e., PDCCH)", "PDCCH" may be proposed as an example of "control information".

Technical features that are separately described in one drawing in the present disclosure may be implemented separately or simultaneously.

Although not limited thereto, various descriptions, functions, procedures, suggestions, methods and/or operational flowcharts of the present disclosure disclosed herein can be applied to various fields requiring wireless communication and/or connection (e.g., 5G) between devices.

Hereinafter, the present disclosure will be described in more detail with reference to drawings. The same reference numerals in the following drawings and/or descriptions may refer to the same and/or corresponding hardware blocks, software blocks, and/or functional blocks unless otherwise indicated.

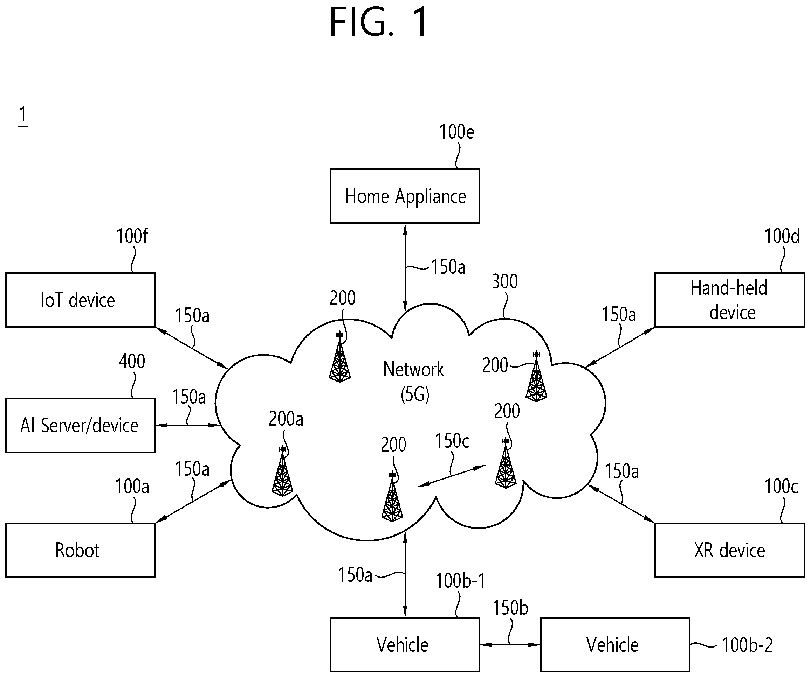

FIG. 1 shows an example of a communication system to which implementations of the present disclosure is applied.

The 5G usage scenarios shown in FIG. 1 are only exemplary, and the technical features of the present disclosure can be applied to other 5G usage scenarios which are not shown in FIG. 1.

Three main requirement categories for 5G include (1) a category of enhanced Mobile BroadBand (eMBB), (2) a category of massive Machine Type Communication (mMTC), and (3) a category of Ultra-Reliable and Low Latency Communications (URLLC).

Referring to FIG. 1, the communication system 1 includes wireless devices 100a to 100f, Base Stations (BSs) 200, and a network 300. Although FIG. 1 illustrates a 5G network as an example of the network of the communication system 1, the implementations of the present disclosure are not limited to the 5G system, and can be applied to the future communication system beyond the 5G system.

The BSs 200 and the network 300 may be implemented as wireless devices and a specific wireless device may operate as a BS/network node with respect to other wireless devices.

The wireless devices 100a to 100f represent devices performing communication using Radio Access Technology (RAT) (e.g., 5G NR or LTE) and may be referred to as communication/radio/5G devices. The wireless devices 100a to 100f may include, without being limited to, a robot 100a, vehicles 100b-1 and 100b-2, an eXtended Reality (XR) device 100c, a hand-held device 100d, a home appliance 100e, an Internet-of-Things (IoT) device 100f, and an Artificial Intelligence (AI) device/server 400. For example, the vehicles may include a vehicle having a wireless communication function, an autonomous driving vehicle, and a vehicle capable of performing communication between vehicles. The vehicles may include an Unmanned Aerial Vehicle (UAV) (e.g., a drone). The XR device may include an Augmented Reality (AR)/Virtual Reality (VR)/Mixed Reality (MR) device and may be implemented in the form of a Head-Mounted Device (HMD), a Head-Up Display (HUD) mounted in a vehicle, a television, a smartphone, a computer, a wearable device, a home appliance device, a digital signage, a vehicle, a robot, etc. The hand-held device may include a smartphone, a smartpad, a wearable device (e.g., a smartwatch or a smartglasses), and a computer (e.g., a notebook). The home appliance may include a TV, a refrigerator, and a washing machine. The IoT device may include a sensor and a smartmeter.

In the present disclosure, the wireless devices 100a to 100f may be called User Equipments (UEs). A UE may include, for example, a cellular phone, a smartphone, a laptop computer, a digital broadcast terminal, a Personal Digital Assistant (PDA), a Portable Multimedia Player (PMP), a navigation system, a slate Personal Computer (PC), a tablet PC, an ultrabook, a vehicle, a vehicle having an autonomous traveling function, a connected car, an UAV, an AI module, a robot, an AR device, a VR device, an MR device, a hologram device, a public safety device, an MTC device, an IoT device, a medical device, a FinTech device (or a financial device), a security device, a weather/environment device, a device related to a 5G service, or a device related to a fourth industrial revolution field.

The wireless devices 100a to 100f may be connected to the network 300 via the BSs 200. An AI technology may be applied to the wireless devices 100a to 100f and the wireless devices 100a to 100f may be connected to the AI server 400 via the network 300. The network 300 may be configured using a 3G network, a 4G (e.g., LTE) network, a 5G (e.g., NR) network, and a beyond-5G network. Although the wireless devices 100a to 100f may communicate with each other through the BSs 200/network 300, the wireless devices 100a to 100f may perform direct communication (e.g., sidelink communication) with each other without transmiting through the BSs 200/network 300. For example, the vehicles 100b-1 and 100b-2 may perform direct communication (e.g., Vehicle-to-Vehicle (V2V)/Vehicle-to-everything (V2X) communication). The IoT device (e.g., a sensor) may perform direct communication with other IoT devices (e.g., sensors) or other wireless devices 100a to 100f.

Wireless communication/connections 150a, 150b and 150c may be established between the wireless devices 100a to 100f and/or between wireless device 100a to 100f and BS 200 and/or between BSs 200. Herein, the wireless communication/connections may be established through various RATs (e.g., 5G NR) such as uplink/downlink communication 150a, sidelink communication (or Device-to-Device (D2D) communication) 150b, inter-base station communication 150c (e.g., relay, Integrated Access and Backhaul (IAB)), etc. The wireless devices 100a to 100f and the BSs 200/the wireless devices 100a to 100f may transmit/receive radio signals to/from each other through the wireless communication/connections 150a, 150b and 150c. For example, the wireless communication/connections 150a, 150b and 150c may transmit/receive signals through various physical channels. To this end, at least a part of various configuration information configuring processes, various signal processing processes (e.g., channel encoding/decoding, modulation/demodulation, and resource mapping/de-mapping), and resource allocating processes, for transmitting/receiving radio signals, may be performed based on the various proposals of the present disclosure.

NR supports multiples numerologies (and/or multiple Sub-Carrier Spacings (SCS)) to support various 5G services. For example, if SCS is 15 kHz, wide area can be supported in traditional cellular bands, and if SCS is 30 kHz/60 kHz, dense-urban, lower latency, and wider carrier bandwidth can be supported. If SCS is 60 kHz or higher, bandwidths greater than 24.25 GHz can be supported to overcome phase noise.

The NR frequency band may be defined as two types of frequency range, i.e., Frequency Range 1 (FR1) and Frequency Range 2 (FR2). The numerical value of the frequency range may be changed. For example, the frequency ranges of the two types (FR1 and FR2) may be as shown in Table 1 below. For ease of explanation, in the frequency ranges used in the NR system, FR1 may mean "sub 6 GHz range", FR2 may mean "above 6 GHz range," and may be referred to as millimeter Wave (mmW).

**[Table 1]**

| Frequency Range designation | Corresponding frequency range | Subcarrier Spacing |
|---|---|---|
| FR1 | 450MHz - 6000MHz | 15, 30, 60kHz |
| FR2 | 24250MHz - 52600MHz | 60, 120, 240kHz |

As mentioned above, the numerical value of the frequency range of the NR system may be changed. For example, FR1 may include a frequency band of 410MHz to 7125MHz as shown in Table 2 below. That is, FR1 may include a frequency band of 6GHz (or 5850, 5900, 5925 MHz, etc.) or more. For example, a frequency band of 6 GHz (or 5850, 5900, 5925 MHz, etc.) or more included in FR1 may include an unlicensed band. Unlicensed bands may be used for a variety of purposes, for example for communication for vehicles (e.g., autonomous driving).

**[Table 2]**

| Frequency Range designation | Corresponding frequency range | Subcarrier Spacing |
|---|---|---|
| FR1 | 410MHz - 7125MHz | 15, 30, 60kHz |
| FR2 | 24250MHz - 52600MHz | 60, 120, 240kHz |

Here, the radio communication technologies implemented in the wireless devices in the present disclosure may include NarrowBand IoT (NB-IoT) technology for low-power communication as well as LTE, NR and 6G. For example, NB-IoT technology may be an example of Low Power Wide Area Network (LPWAN) technology, may be implemented in specifications such as LTE Cat NB1 and/or LTE Cat NB2, and may not be limited to the above-mentioned names. Additionally and/or alternatively, the radio communication technologies implemented in the wireless devices in the present disclosure may communicate based on LTE-M technology. For example, LTE-M technology may be an example of LPWAN technology and be called by various names such as enhanced MTC (eMTC). For example, LTE-M technology may be implemented in at least one of the various specifications, such as 1) LTE Cat 0, 2) LTE Cat M1, 3) LTE Cat M2, 4) LTE non-bandwidth limited (non-BL), 5) LTE-MTC, 6) LTE Machine Type Communication, and/or 7) LTE M, and may not be limited to the above-mentioned names. Additionally and/or alternatively, the radio communication technologies implemented in the wireless devices in the present disclosure may include at least one of ZigBee, Bluetooth, and/or LPWAN which take into account low-power communication, and may not be limited to the above-mentioned names. For example, ZigBee technology may generate Personal Area Networks (PANs) associated with small/low-power digital communication based on various specifications such as IEEE 802.15.4 and may be called various names.

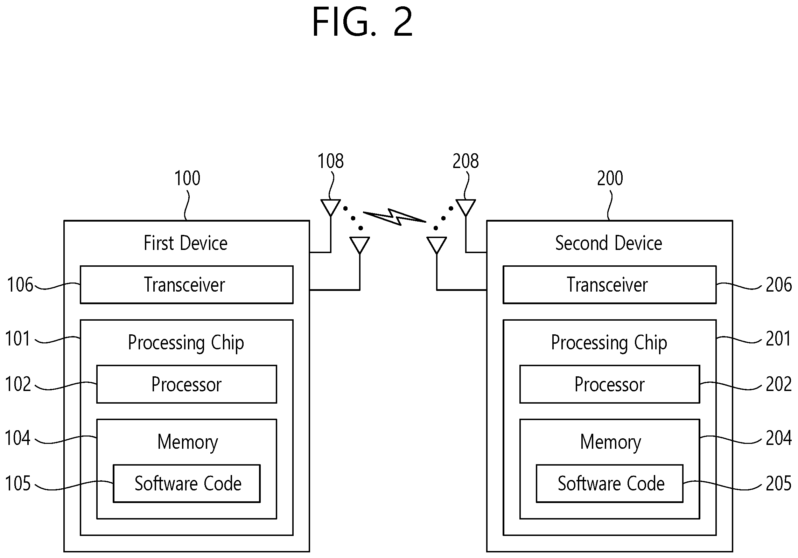

FIG. 2 shows an example of wireless devices to which implementations of the present disclosure is applied.

In FIG. 2, The first wireless device 100 and/or the second wireless device 200 may be implemented in various forms according to use cases/services. For example, {the first wireless device 100 and the second wireless device 200} may correspond to at least one of {the wireless device 100a to 100f and the BS 200}, {the wireless device 100a to 100f and the wireless device 100a to 100f} and/or {the BS 200 and the BS 200} of FIG. 1. The first wireless device 100 and/or the second wireless device 200 may be configured by various elements, devices/parts, and/or modules.

The first wireless device 100 may include at least one transceiver, such as a transceiver 106, at least one processing chip, such as a processing chip 101, and/or one or more antennas 108.

The processing chip 101 may include at least one processor, such a processor 102, and at least one memory, such as a memory 104. Additional and/or alternatively, the memory 104 may be placed outside of the processing chip 101.

The processor 102 may control the memory 104 and/or the transceiver 106 and may be adapted to implement the descriptions, functions, procedures, suggestions, methods and/or operational flowcharts described in the present disclosure. For example, the processor 102 may process information within the memory 104 to generate first information/signals and then transmit radio signals including the first information/signals through the transceiver 106. The processor 102 may receive radio signals including second information/signals through the transceiver 106 and then store information obtained by processing the second information/signals in the memory 104.

The memory 104 may be operably connectable to the processor 102. The memory 104 may store various types of information and/or instructions. The memory 104 may store a firmware and/or a software code 105 which implements codes, commands, and/or a set of commands that, when executed by the processor 102, perform the descriptions, functions, procedures, suggestions, methods and/or operational flowcharts disclosed in the present disclosure. For example, the firmware and/or the software code 105 may implement instructions that, when executed by the processor 102, perform the descriptions, functions, procedures, suggestions, methods and/or operational flowcharts disclosed in the present disclosure. For example, the firmware and/or the software code 105 may control the processor 102 to perform one or more protocols. For example, the firmware and/or the software code 105 may control the processor 102 to perform one or more layers of the radio interface protocol.

Herein, the processor 102 and the memory 104 may be a part of a communication modem/circuit/chip designed to implement RAT (e.g., LTE or NR). The transceiver 106 may be connected to the processor 102 and transmit and/or receive radio signals through one or more antennas 108. Each of the transceiver 106 may include a transmitter and/or a receiver. The transceiver 106 may be interchangeably used with Radio Frequency (RF) unit(s). In the present disclosure, the first wireless device 100 may represent a communication modem/circuit/chip.

The second wireless device 200 may include at least one transceiver, such as a transceiver 206, at least one processing chip, such as a processing chip 201, and/or one or more antennas 208.

The processing chip 201 may include at least one processor, such a processor 202, and at least one memory, such as a memory 204. Additional and/or alternatively, the memory 204 may be placed outside of the processing chip 201.

The processor 202 may control the memory 204 and/or the transceiver 206 and may be adapted to implement the descriptions, functions, procedures, suggestions, methods and/or operational flowcharts described in the present disclosure. For example, the processor 202 may process information within the memory 204 to generate third information/signals and then transmit radio signals including the third information/signals through the transceiver 206. The processor 202 may receive radio signals including fourth information/signals through the transceiver 106 and then store information obtained by processing the fourth information/signals in the memory 204.

The memory 204 may be operably connectable to the processor 202. The memory 204 may store various types of information and/or instructions. The memory 204 may store a firmware and/or a software code 205 which implements codes, commands, and/or a set of commands that, when executed by the processor 202, perform the descriptions, functions, procedures, suggestions, methods and/or operational flowcharts disclosed in the present disclosure. For example, the firmware and/or the software code 205 may implement instructions that, when executed by the processor 202, perform the descriptions, functions, procedures, suggestions, methods and/or operational flowcharts disclosed in the present disclosure. For example, the firmware and/or the software code 205 may control the processor 202 to perform one or more protocols. For example, the firmware and/or the software code 205 may control the processor 202 to perform one or more layers of the radio interface protocol.

Herein, the processor 202 and the memory 204 may be a part of a communication modem/circuit/chip designed to implement RAT (e.g., LTE or NR). The transceiver 206 may be connected to the processor 202 and transmit and/or receive radio signals through one or more antennas 208. Each of the transceiver 206 may include a transmitter and/or a receiver. The transceiver 206 may be interchangeably used with RF unit. In the present disclosure, the second wireless device 200 may represent a communication modem/circuit/chip.

Hereinafter, hardware elements of the wireless devices 100 and 200 will be described more specifically. One or more protocol layers may be implemented by, without being limited to, one or more processors 102 and 202. For example, the one or more processors 102 and 202 may implement one or more layers (e.g., functional layers such as Physical (PHY) layer, Media Access Control (MAC) layer, Radio Link Control (RLC) layer, Packet Data Convergence Protocol (PDCP) layer, Radio Resource Control (RRC) layer, and Service Data Adaptation Protocol (SDAP) layer). The one or more processors 102 and 202 may generate one or more Protocol Data Units (PDUs), one or more Service Data Unit (SDUs), messages, control information, data, or information according to the descriptions, functions, procedures, suggestions, methods and/or operational flowcharts disclosed in the present disclosure. The one or more processors 102 and 202 may generate signals (e.g., baseband signals) including PDUs, SDUs, messages, control information, data, or information according to the descriptions, functions, procedures, suggestions, methods and/or operational flowcharts disclosed in the present disclosure and provide the generated signals to the one or more transceivers 106 and 206. The one or more processors 102 and 202 may receive the signals (e.g., baseband signals) from the one or more transceivers 106 and 206 and acquire the PDUs, SDUs, messages, control information, data, or information according to the descriptions, functions, procedures, suggestions, methods and/or operational flowcharts disclosed in the present disclosure.

The one or more processors 102 and 202 may be referred to as controllers, microcontrollers, microprocessors, or microcomputers. The one or more processors 102 and 202 may be implemented by hardware, firmware, software, or a combination thereof. As an example, one or more Application Specific Integrated Circuits (ASICs), one or more Digital Signal Processors (DSPs), one or more Digital Signal Processing Devices (DSPDs), one or more Programmable Logic Devices (PLDs), or one or more Field Programmable Gate Arrays (FPGAs) may be included in the one or more processors 102 and 202. For example, the one or more processors 102 and 202 may be configured by a set of a communication control processor, an Application Processor (AP), an Electronic Control Unit (ECU), a Central Processing Unit (CPU), a Graphic Processing Unit (GPU), and a memory control processor. The one or more memories 104 and 204 may be connected to the one or more processors 102 and 202 and store various types of data, signals, messages, information, programs, code, instructions, and/or commands. The one or more memories 104 and 204 may be configured by Random Access Memory (RAM), Dynamic RAM (DRAM), Read-Only Memory (ROM), electrically Erasable Programmable Read-Only Memory (EPROM), flash memory, volatile memory, non-volatile memory, hard drive, register, cash memory, computer-readable storage medium, and/or combinations thereof. The one or more memories 104 and 204 may be located at the interior and/or exterior of the one or more processors 102 and 202. The one or more memories 104 and 204 may be connected to the one or more processors 102 and 202 through various technologies such as wired or wireless connection.

The one or more transceivers 106 and 206 may transmit user data, control information, and/or radio signals/channels, mentioned in the descriptions, functions, procedures, suggestions, methods and/or operational flowcharts disclosed in the present disclosure, to one or more other devices. The one or more transceivers 106 and 206 may receive user data, control information, and/or radio signals/channels, mentioned in the descriptions, functions, procedures, suggestions, methods and/or operational flowcharts disclosed in the present disclosure, from one or more other devices. For example, the one or more transceivers 106 and 206 may be connected to the one or more processors 102 and 202 and transmit and receive radio signals. For example, the one or more processors 102 and 202 may perform control so that the one or more transceivers 106 and 206 may transmit user data, control information, or radio signals to one or more other devices. The one or more processors 102 and 202 may perform control so that the one or more transceivers 106 and 206 may receive user data, control information, or radio signals from one or more other devices.

The one or more transceivers 106 and 206 may be connected to the one or more antennas 108 and 208. Additionally and/or alternatively, the one or more transceivers 106 and 206 may include one or more antennas 108 and 208. The one or more transceivers 106 and 206 may be adapted to transmit and receive user data, control information, and/or radio signals/channels, mentioned in the descriptions, functions, procedures, suggestions, methods and/or operational flowcharts disclosed in the present disclosure, through the one or more antennas 108 and 208. In the present disclosure, the one or more antennas 108 and 208 may be a plurality of physical antennas or a plurality of logical antennas (e.g., antenna ports).

The one or more transceivers 106 and 206 may convert received user data, control information, radio signals/channels, etc., from RF band signals into baseband signals in order to process received user data, control information, radio signals/channels, etc., using the one or more processors 102 and 202. The one or more transceivers 106 and 206 may convert the user data, control information, radio signals/channels, etc., processed using the one or more processors 102 and 202 from the base band signals into the RF band signals. To this end, the one or more transceivers 106 and 206 may include (analog) oscillators and/or filters. For example, the one or more transceivers 106 and 206 can up-convert OFDM baseband signals to OFDM signals by their (analog) oscillators and/or filters under the control of the one or more processors 102 and 202 and transmit the up-converted OFDM signals at the carrier frequency. The one or more transceivers 106 and 206 may receive OFDM signals at a carrier frequency and downconvert the OFDM signals into OFDM baseband signals by their (analog) oscillators and/or filters under the control of the one or more processors 102 and 202.

Although not shown in FIG. 2, the wireless devices 100 and 200 may further include additional components. The additional components 140 may be variously configured according to types of the wireless devices 100 and 200. For example, the additional components 140 may include at least one of a power unit/battery, an Input/Output (I/O) device (e.g., audio I/O port, video I/O port), a driving device, and a computing device. The additional components 140 may be coupled to the one or more processors 102 and 202 via various technologies, such as a wired or wireless connection.

In the implementations of the present disclosure, a UE may operate as a transmitting device in Uplink (UL) and as a receiving device in Downlink (DL). In the implementations of the present disclosure, a BS may operate as a receiving device in UL and as a transmitting device in DL. Hereinafter, for convenience of description, it is mainly assumed that the first wireless device 100 acts as the UE, and the second wireless device 200 acts as the BS. For example, the processor(s) 102 connected to, mounted on or launched in the first wireless device 100 may be adapted to perform the UE operation according to an implementation of the present disclosure or control the transceiver(s) 106 to perform the UE operation according to an implementation of the present disclosure. The processor(s) 202 connected to, mounted on or launched in the second wireless device 200 may be adapted to perform the BS operation according to an implementation of the present disclosure or control the transceiver(s) 206 to perform the BS operation according to an implementation of the present disclosure.

In the present disclosure, a BS is also referred to as a node B (NB), an eNode B (eNB), or a gNB.

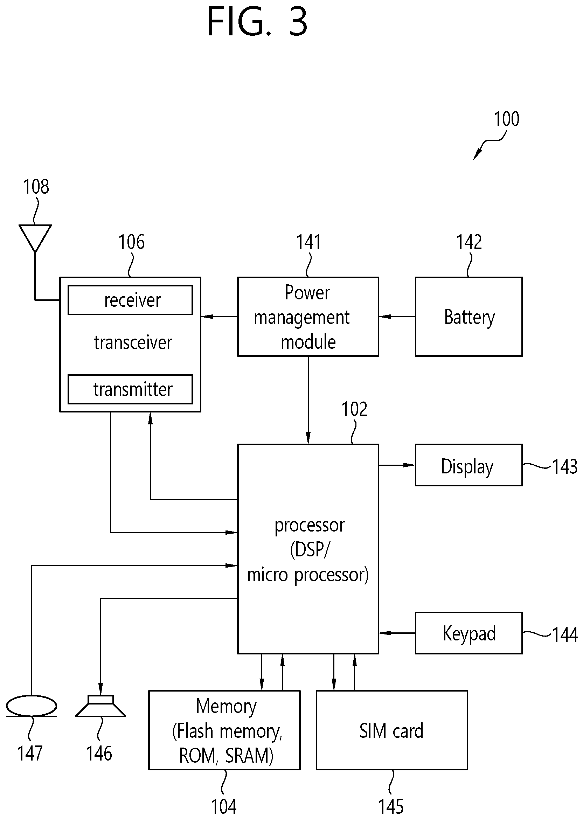

FIG. 3 shows an example of UE to which implementations of the present disclosure is applied.

Referring to FIG. 3, a UE 100 may correspond to the first wireless device 100 of FIG. 2.

A UE 100 includes a processor 102, a memory 104, a transceiver 106, one or more antennas 108, a power management module 141, a battery 142, a display 143, a keypad 144, a Subscriber Identification Module (SIM) card 145, a speaker 146, and a microphone 147.

The processor 102 may be adapted to implement the descriptions, functions, procedures, suggestions, methods and/or operational flowcharts disclosed in the present disclosure. The processor 102 may be adapted to control one or more other components of the UE 100 to implement the descriptions, functions, procedures, suggestions, methods and/or operational flowcharts disclosed in the present disclosure. Layers of the radio interface protocol may be implemented in the processor 102. The processor 102 may include ASIC, other chipset, logic circuit and/or data processing device. The processor 102 may be an application processor. The processor 102 may include at least one of DSP, CPU, GPU, a modem (modulator and demodulator). An example of the processor 102 may be found in SNAPDRAGON^{™} series of processors made by Qualcomm^{®}, EXYNOS^{™} series of processors made by Samsung^{®}, A series of processors made by Apple^{®}, HELIO^{™} series of processors made by MediaTek^{®}, ATOM^{™} series of processors made by Intel^{®} or a corresponding next generation processor.

The memory 104 is operatively coupled with the processor 102 and stores a variety of information to operate the processor 102. The memory 104 may include ROM, RAM, flash memory, memory card, storage medium and/or other storage device. When the embodiments are implemented in software, the techniques described herein can be implemented with modules (e.g., procedures, functions, etc.) that perform the descriptions, functions, procedures, suggestions, methods and/or operational flowcharts disclosed in the present disclosure. The modules can be stored in the memory 104 and executed by the processor 102. The memory 104 can be implemented within the processor 102 or external to the processor 102 in which case those can be communicatively coupled to the processor 102 via various means as is known in the art.

The transceiver 106 is operatively coupled with the processor 102, and transmits and/or receives a radio signal. The transceiver 106 includes a transmitter and a receiver. The transceiver 106 may include baseband circuitry to process radio frequency signals. The transceiver 106 controls the one or more antennas 108 to transmit and/or receive a radio signal.

The power management module 141 manages power for the processor 102 and/or the transceiver 106. The battery 142 supplies power to the power management module 141.

The display 143 outputs results processed by the processor 102. The keypad 144 receives inputs to be used by the processor 102. The keypad 144 may be shown on the display 143.

The SIM card 145 is an integrated circuit that is intended to securely store the International Mobile Subscriber Identity (IMSI) number and its related key, which are used to identify and authenticate subscribers on mobile telephony devices (such as mobile phones and computers). It is also possible to store contact information on many SIM cards.

The speaker 146 outputs sound-related results processed by the processor 102. The microphone 147 receives sound-related inputs to be used by the processor 102.

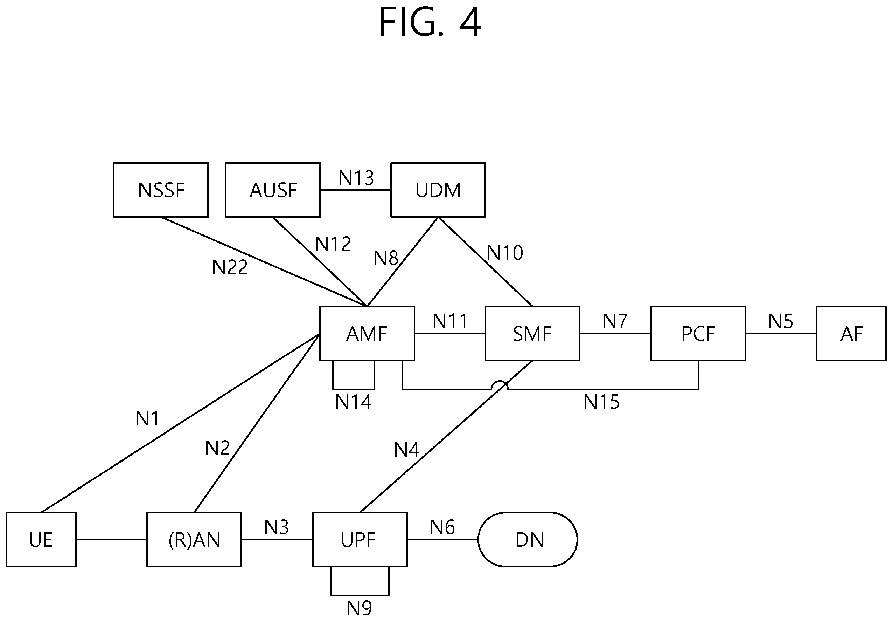

FIG. 4 shows an example of 5G system architecture to which implementations of the present disclosure is applied.

The 5G system (5GS) architecture consists of the following network functions (NF).
- Authentication Server Function (AUSF)
- Access and Mobility Management Function (AMF)
- Data Network (DN), e.g., operator services, Internet access or 3rd party services
- Unstructured Data Storage Function (UDSF)
- Network Exposure Function (NEF)
- Intermediate NEF (I-NEF)
- Network Repository Function (NRF)
- Network Slice Selection Function (NSSF)
- Policy Control Function (PCF)
- Session Management Function (SMF)
- Unified Data Management (UDM)
- Unified Data Repository (UDR)
- User Plane Function (UPF)
- UE radio Capability Management Function (UCMF)
- Application Function (AF)
- User Equipment (UE)
- (Radio) Access Network ((R)AN)
- 5G-Equipment Identity Register (5G-EIR)
- Network Data Analytics Function (NWDAF)
- CHarging Function (CHF)

Furthermore, the following network functions may be considered.
- Non-3GPP InterWorking Function (N3IWF)
- Trusted Non-3GPP Gateway Function (TNGF)
- Wireline Access Gateway Function (W-AGF)

FIG. 4 depicts the 5G system architecture in the non-roaming case, using the reference point representation showing how various network functions interact with each other.

In FIG. 4, for the sake of clarity of the point-to-point diagrams, the UDSF, NEF and NRF have not been depicted. However, all depicted Network Functions can interact with the UDSF, UDR, NEF and NRF as necessary.

For clarity, the UDR and its connections with other NFs, e.g., PCF, are not depicted in FIG. 4. For clarity, the NWDAF and its connections with other NFs, e.g., PCF, are not depicted in FIG. 4.

The 5G system architecture contains the following reference points:
- N1: Reference point between the UE and the AMF.
- N2: Reference point between the (R)AN and the AMF.
- N3: Reference point between the (R)AN and the UPF.
- N4: Reference point between the SMF and the UPF.
- N6: Reference point between the UPF and a Data Network.
- N9: Reference point between two UPFs.

The following reference points show the interactions that exist between the NF services in the NFs.
- N5: Reference point between the PCF and an AF.
- N7: Reference point between the SMF and the PCF.
- N8: Reference point between the UDM and the AMF.
- N10: Reference point between the UDM and the SMF.
- N11: Reference point between the AMF and the SMF.
- N12: Reference point between the AMF and the AUSF.
- N13: Reference point between the UDM and the AUSF.
- N14: Reference point between two AMFs.
- N15: Reference point between the PCF and the AMF in the case of non-roaming scenario, PCF in the visited network and AMF in the case of roaming scenario.
- N16: Reference point between two SMFs, (in roaming case between SMF in the visited network and the SMF in the home network).
- N22: Reference point between the AMF and the NSSF.

In some cases, a couple of NFs may need to be associated with each other to serve a UE.

### < UE-to-Network Relay >

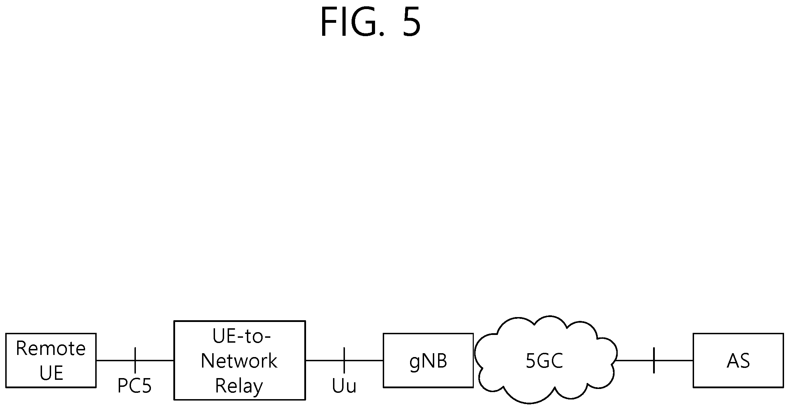

FIG. 5 illustrates an example architecture of UE-to-Network Relay.

Referring to FIG. 5, a UE-to-Network Relay supports the network connection of a Remote UE.

The PC5 link is the interface between the UE and the UE-to-Network Relay. The Uu link is the interface between the UE-to-Network Relay and the base station.

If a UE has established a PC5 link with the UE-to-Network Relay, the UE is considered a Remote UE.

A UE-to-Network Relay entity may provide functionality to support connectivity to the network for Remote UEs. UE-to-Network Relay can be used for both public safety services and commercial services (e.g., interactive services).

If a UE (e.g., a Remote UE) successfully establishes a PC5 link to a UE-to-Network Relay, the UE (e.g., the Remote UE) can be considered a Remote UE for that specific UE-to-Network Relay. The Remote UE may be located within NG-RAN coverage or outside NG-RAN coverage.

The UE-to-Network Relay may relay unicast traffic (UL and DL traffic) between the Remote UE and the network. The UE-to-Network Relay should provide a generic capability to relay all IP traffic.

For unicast traffic between Remote UEs and UE-to-Network Relays, one-to-one direct communication may be used.

Proposals to support Proximity based Services (ProSe) in 5GS are being discussed. This includes receiving network connectivity services via UE-to-Network Relay, which may be Layer-2 UE-to-Network Relay or Layer-3 UE-to-Network Relay.

In the prior art, a UE may be provided with connectivity services from a network in a manner such as the example below.
1) The UE may be provided with services from the network directly for Protocol Data Unit (PDU) sessions without going through UE-to-Network Relay (this is called Direct Network Communication or Direct Path).
2) The UE may be provided with services from the network indirectly for PDU sessions via UE-to-Network Relay (this is called Indirect Network Communication or Indirect Path).

In particular, the following scenarios are not considered possible in the prior art:
i) the UE is simultaneously provided with network connectivity services through one or more Layer-2 UE-to-Network Relays, while the UE is provided with network connectivity services through a direct path.
ii) The UE is provided with network connectivity services via two or more Layer-2 UE-to-Network Relays.

This is because, even if the UE receives network connectivity services via Layer-2 UE-to-Network Relay, the UE performs RRC operations and NAS operations with the NG-RAN and Core network (via Layer-2 UE-to-Network Relay). In the scenarios i) and ii) above, the UE establishes multiple RRC connections and NAS connections via 3GPP access (i.e., Uu interface between the UE and NG-RAN in the direct path and between Layer-2 UE-to-Network Relay and NG-RAN in the indirect path), which was not allowed in the prior art.

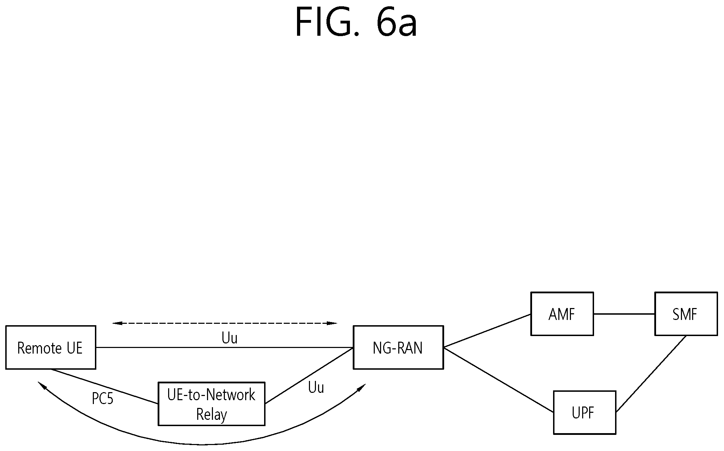

In contrast to the prior art, it is contemplated that the UE receives services from the network over multiple paths. The examples of FIGS. 6a through 6d below illustrate a scenario where a UE receives services from the network over two paths.

The following drawings are intended to illustrate specific embodiments of the present disclosure. The designations of specific devices or the designations of specific signals/messages/fields shown in the drawings are for illustrative purposes only, and the technical features of the present specification are not limited to the specific designations used in the drawings below.

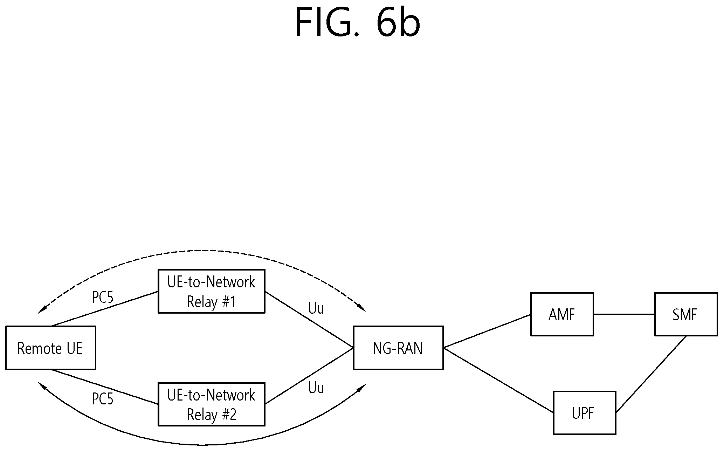

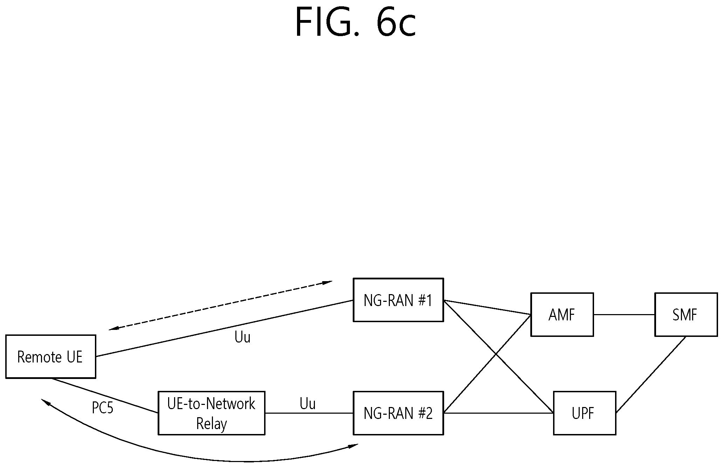

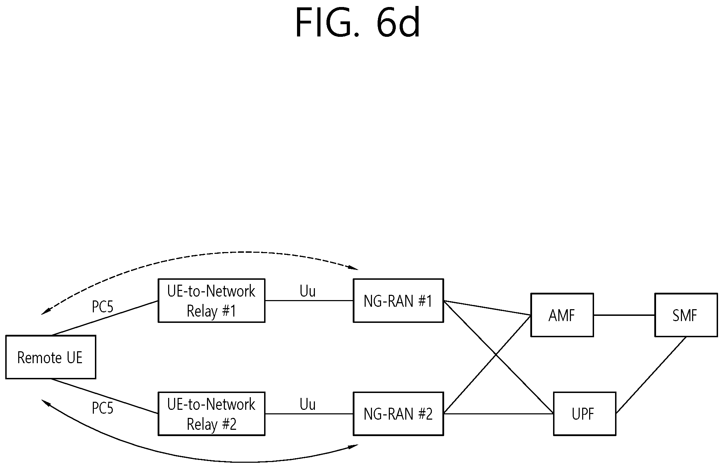

**FIG. 6a** **illustrates a first example where a UE is provided with services over two paths.** **FIG. 6b** **illustrates a second example where the UE is provided with services via two paths.** **FIG. 6c** **illustrates a third example where the UE is provided with services via two paths.** **FIG. 6d** **illustrates a fourth example where the UE is provided with services via two paths.**

In the example of FIG. 6a, a UE may receive services from the network via a direct path and an indirect path. In this case, the paths may be serviced over the same NG-RAN.

In the example of FIG. 6b, the UE may receive services from the network via two different indirect paths. In this case, the paths may be serviced over the same NG-RAN.

In the example of FIG. 6c, the UE may receive services from the network via a direct path and an indirect path. In this case, the paths may be serviced by different NG-RANs.

In FIG. 6d, the UE may receive services from the network via two different indirect paths. In this case, the paths may be serviced by different NG-RANs.

As shown in the examples in FIGS. 6a through 6d, for all paths, it is assumed that the connection/communication between the UE and the network along the path is 3GPP access (i.e., Uu interface), i.e., for direct paths, the connection/communication between the UE and the network may be established via 3GPP access. For the indirect path, the connection/communication between the UE-to-Network Relay and the network may be established via 3GPP access.

While the examples of FIGS. 6a through 6b illustrate two paths, they are illustrative only, and the scope of the multi-path described in the present disclosure of the present specification may extend to three or more paths.

The examples of FIGS. 6a through 6d depict UEs being served over the same PLMN. In other cases, the UEs may be served by paths through different PLMNs.

A UE using these multiple paths may be assumed to be supported for both the non-roaming and roaming cases.

Discussions are necessary to achieve the following objectives:

To support UE-to-network relay by supporting multi-path transmission using only one direct network communication path and one indirect network communication path to improve stability or data rate.

In addition, discussions are necessary to achieve the following objectives:

It is necessary to study the benefits and potential solutions (e.g., switching between multiple paths or simultaneous utilization) of multi-path support for improving stability and throughput in the following scenarios:

A UE is connected to the same gNB using 1) one direct path and one indirect path through a Layer-2 UE-to-network relay. Alternatively, the UE is connected to the same gNB 2) through another UE (assuming a UE-to-UE connection is ideal). The solution of 1) may be reused for 2) without excluding the possibility of excluding part of the solution unnecessary for the task of 2).

PDCP (Packet Data Convergence Protocol) duplication may be supported. PDCP duplication is a function introduced to increase data reliability in 5G networks. PDCP duplication is used to improve transmission efficiency and reduce packet loss by transmitting the same PDCP PDU (Protocol Data Unit) through two different paths. In this way, even if a packet is lost in one path, it can be received in another path, thereby ensuring the reliability of data transmission.

In the present disclosure, in the case where there is no particular mention of an indirect path, the indirect path is basically assumed to be an indirect path through a Layer-2 UE-to-Network Relay.

There is a problem that a multi-path operation including a direct path in which a UE is directly connected to a base station and an indirect path in which the UE is connected to the base station through a Relay UE is not effectively supported.

For example, multi-path including an indirect path based on Sidelink (SL) relay has been introduced. PDCP duplication, which transmits the same data to two paths including an indirect path and a direct path, may be used. According to the prior art, even if a DU transmits a Downlink Data Delivery Status (DDDS) message to a CU-UP, there may be a problem in data transmission between a remote UE and a relay UE of the indirect path.

In a situation where PDCP duplication is applied, a PDCP located in a CU can learn that data transmission has succeeded through one RLC entity located in a DU. According to the prior art, in this case, one side may instruct the other Radio Link Control (RLC) entity not to transmit the corresponding PDCP PDU and to discard the corresponding packet. For reference, the two RLC entities may be in the same DU or may be located in different DUs. However, for a situation where multi-path is applied to SL relay, the following agreement was discussed.

Agreement: In packet duplication for scenario 1, a PDCP entity does not need to instruct a Uu RLC entity to discard a PDCP PDU when a PC5 RLC entity informs of successful transmission of the PDCP PDU. In packet duplication for scenario 1, when a Uu RLC entity of a remote UE informs of successful transmission of a PDCP PDU, the PDCP entity shall instruct a PC5 RLC entity to discard the PDCP PDU.

For reference, Scenario 1 is a scenario using a PC5 link between a Remote UE and a Relay UE. Scenario 2 is a scenario using a non-3GPP connection (N3C) between a Remote UE and a Relay UE.

In communication based on SL relay, multi-path transmission may be considered. In this case, a PC5 RLC entity may inform a PDCP that data delivery toward a Relay UE was successful. Even in such a case, the PDCP should not block a Uu RLC entity from transmitting a corresponding PDCP PDU or request deletion of the corresponding PDCP PDU. This is because there is a possibility that the Relay UE fails to transmit the corresponding data toward a Remote UE (for DL) or toward a gNB (for UL). In case of a failure, the DU must be able to deliver the corresponding data packet to the terminal through a Uu link. For example, a DU located in a direct path may deliver a duplicated PDCP PDU to the terminal. However, the DU does not send data through the direct path just because the indirect path has failed. Since the PDCP of the CU did not request the Uu RLC entity of the DU to delete the duplicated PDCP PDU even after receiving an ACK from the PC5 RLC entity, the Uu RLC entity naturally transmits the stored duplicated PDCP PDU to the terminal.

For reference, the PC5 RLC entity refers to an RLC entity related to an indirect path and may be located in a DU. The PC5 RLC entity may be in the same DU as the Uu RLC entity or may be located in a different DU. The PDCP is located in a CU. A DU may manage a PHY layer, a MAC layer, and an RLC layer, and a CU may manage a PDCP layer, an RRC layer, and an SDAP layer.

Therefore, when a gNB-CU is divided into a CP and a UP, the CU-UP must know information such as a bearer and/or RLC entity, and a TNL address related to an indirect path. The CU-UP may receive successfully delivered PDCP SN information through a DDDS from an RLC entity related to the indirect path. Even in such a case, the CU-UP may not perform a deletion or transmission prohibition operation for the corresponding data packet to a Uu entity related to a direct path.

In various examples of the present disclosure, a method is described in which a CU-CP informs a CU-UP of bearer and/or TNL address information related to an indirect path among a direct path and an indirect path generated for multi-path transmission.

Among service operations between Core NFs described in the present disclosure, some may be newly defined service operations. In addition, among NG messages between an AMF and an NG-RAN described in the present disclosure, some may be newly defined NG messages. In addition, among RRC messages between an NG-RAN and a terminal described in the present disclosure, some may be newly defined RRC messages.

In the procedures below, some steps may be performed simultaneously/in parallel, or may be performed in an order different from what is described.

The names of indication or parameter information proposed below are exemplary and may be interpreted as being changed to other names for the proposed procedure/purpose/method.

### 1. The first example of the present disclosure

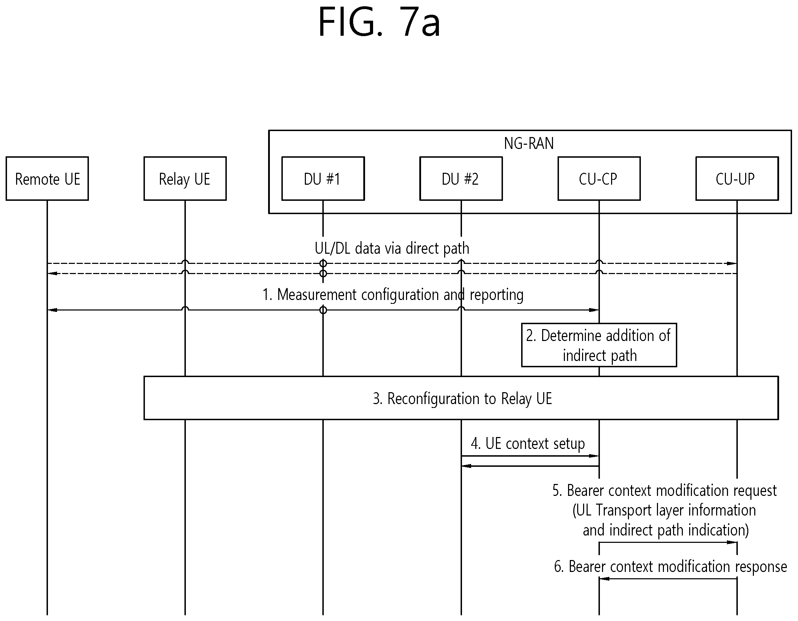

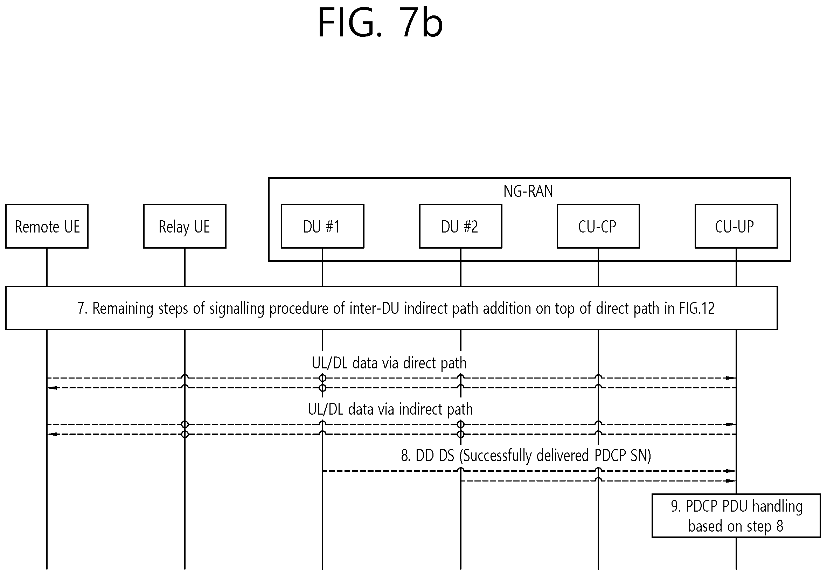

Hereinafter, the first example of the present disclosure related to an indirect path addition will be described with reference to FIGS. 7a and 7b.

The following drawings are prepared to describe specific examples of the present specification. Since specific device names or specific signal/message/field names described in the drawings are presented as examples, the technical features of the present specification are not limited to the specific names used in the following drawings.

**FIGS. 7a** **and** **7b** **show an example of an indirect path addition procedure according to the first example of the present disclosure.**

FIGS. 7a and 7b show an example of providing an indirect path indication when an inter-DU indirect path is additionally added to a direct path.

In the example of FIGS. 7a and 7b, multi-path transmission may be performed by creating a direct path and an indirect path in each DU in an inter-DU situation. In this case, a CU-CP may inform a CU-UP of bearer and/or TNL address information related to the indirect path.

The example of FIGS. 7a and 7b assumes an inter-DU situation where a direct path and an indirect path are connected to DU1 and DU2, respectively, but this is merely an example. The first example of the present disclosure is also applicable to a case where DU1 and DU2 are the same.

Step 0: A Remote UE is in a state of being directly connected to an NG-RAN through DU1. Therefore, the Remote UE may transmit and receive DL/UL data with the NG-RAN through DU1 (i.e., through a direct path).

Step 1: The Remote UE may receive a measurement configuration from the NG-RAN. Based on the measurement configuration, the Remote UE performs measurement/discovery operations for neighboring Uu cells and/or Relay UEs, and then reports the results of the operations to the NG-RAN. The results of the operations may include an L2 U2N Relay UE ID of a candidate relay UE located nearby, a serving cell ID, a sidelink measurement result, and/or a Uu link measurement.

Step 2: Based on the measurement results received in Step 1, the CU-CP may select a Relay UE capable of reaching the same NG-RAN. Relay UEs may have different serving gNBs. The Remote UE may need to be provided with service from the same base station through a direct path and an indirect path. Therefore, from the perspective of the base station, only a Relay UE connected to itself may be considered as a target for the indirect path.

The CU-CP may decide to additionally create an indirect path through the corresponding Relay UE and transmit DL/UL data with the Remote UE through multi-path.

Step 3: In order to enable the Relay UE to serve the Remote UE, the CU-CP, the CU-UP, and the DU may proceed with reconfiguration for the Relay UE in advance.

Step 4: The CU-CP may request the DU2 to a UE context setup for the Remote UE and allocate resources for a Bearer by using a UE CONTEXT SETUP REQUEST message. After completing the UE context setup and resource allocation, the DU2 may respond to the CU-CP through a UE CONTEXT SETUP RESPONSE message including an F1-U DL TNL address.

NOTE: If DU1 and DU2 are the same, the CU-CP may perform a UE Context Modification procedure in Step 4.

Step 5: The CU-CP may transmit a BEARER CONTEXT MODIFICATION REQUEST message to the CU-UP. For example, the BEARER CONTEXT MODIFICATION REQUEST message may include UP Transport Layer information and/or an Indirect Path Indication. For example, the Indirect Path Indication may inform the CU-UP that an indirect path is used in a multi-path situation. For example, the Indirect Path Indication may inform the CU-UP of at least one of: that multi-path transmission is required for the Remote UE, that an indirect path through a Relay UE should be additionally created in the CU-UP for the multi-path transmission, and/or information related to an F1-U DL TNL address associated with the indirect path.

NOTE: For reference, the CU-CP may also inform the CU-UP of information related to an F1-U DL TNL address associated with the direct path.

Step 6: The CU-UP may transmit a bearer context modification response message to the CU-CP. For example, based on the information received in Step 5, the CU-UP may additionally allocate an F1-U UL TNL address for the newly created indirect path for the multi-path transmission of the Remote UE. The CU-UP may transmit a BEARER CONTEXT MODIFICATION RESPONSE message including the F1-U UL TNL address for the indirect path to the CU-CP.

NOTE: The CU-CP may also inform the CU-UP in Step 5 that a specific bearer of the Remote UE is associated with a specific Relay UE or an indirect path. In this case, based on the fact that the specific bearer is associated with the specific Relay UE or the indirect path, the CU-UP may perform the operation of Step 6.

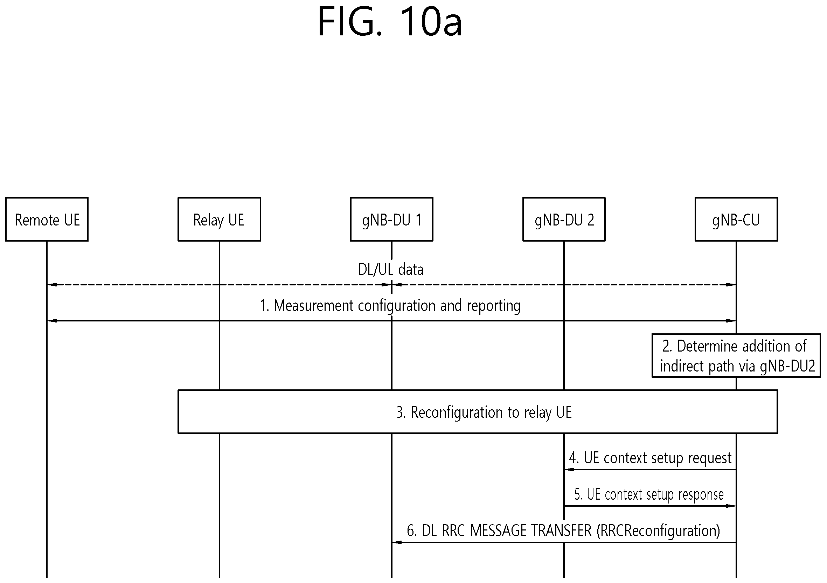

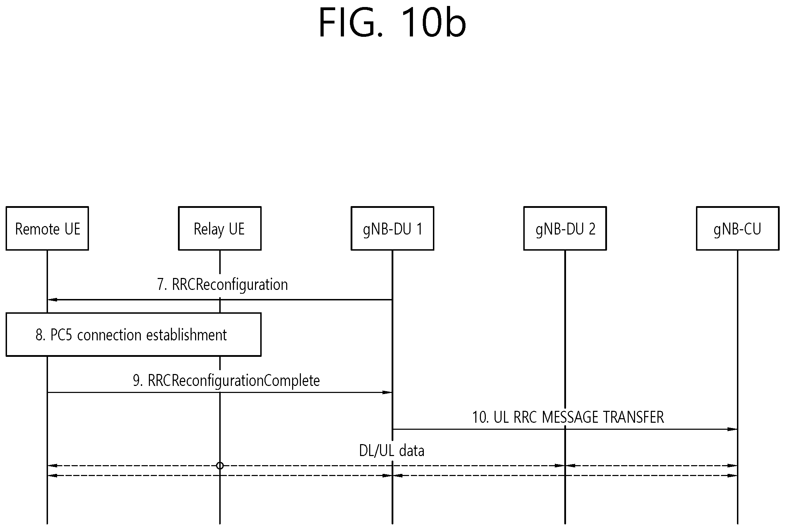

Step 7: Among the "Signalling procedure of inter-DU indirect path addition on top of direct path" according to the examples of FIGS. 10a and 10b, the remaining steps are performed.

The Remote UE and the NG-RAN may transmit and receive DL/UL data using both the direct path through the Uu link and the indirect path through the Relay UE.

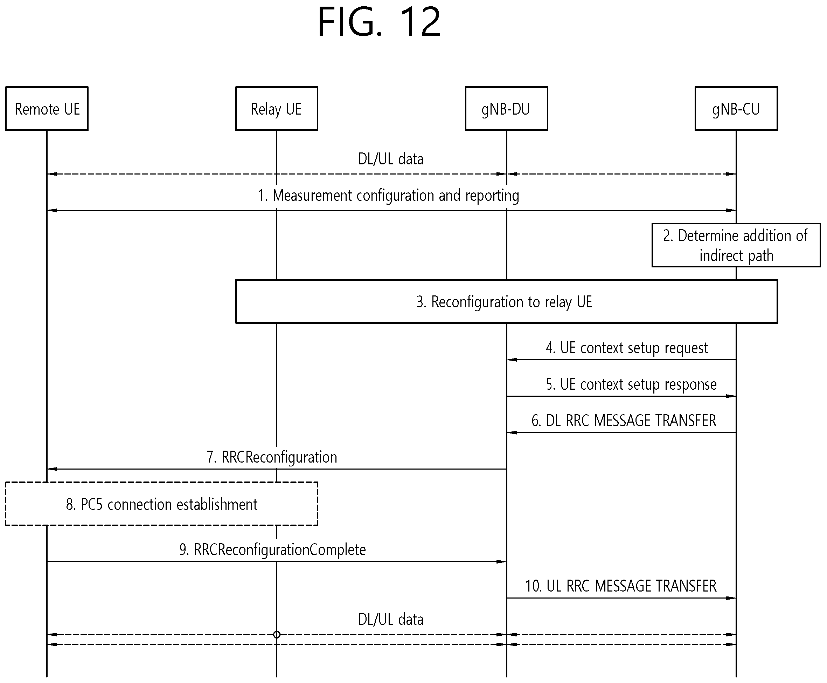

NOTE: If DU1 and DU2 are the same, the remaining steps among the "Signalling procedure of intra-DU indirect path addition on top of direct path" of FIG. 12 may be performed.

Step 8: Each of DU1 and DU2 may successfully transmit the DL data received from the CU-UP to the Remote UE or the Relay UE. In this case, DU1 and DU2 may each transmit a DDDS to the CU-UP. DU1 and DU2 may inform the CU-UP that the DL data has been successfully transmitted to the Remote UE or the Relay UE, respectively, through the DDDS. The DDDS may include a Highest successfully delivered NR PDCP Sequence Number and/or a Number of successfully delivered out of sequence PDCP Sequence Number range.

For reference, Table 3 is an example of the DDDS transmitted by the DU. For example, Table 3 shows the DL DATA DELIVERY STATUS (PDU Type 1) Format.

**[Table 3]**

| Bits | | | | | | | | octet number |
|---|---|---|---|---|---|---|---|---|
| 7 | 6 | 5 | 4 | 3 | 2 | 1 | 0 | |
| PDU type (=1) | | | | Highest Transmit ted NR PDCP SN Ind | Highest Delivered NR PDCP SN Ind | Final Frame Ind. | Lost Packet Report | 1 |
| Spare | Feedback Delay Ind. | NR-U SN Ind. | Delivered NR PDCP SN Range Ind | Data rate Ind. | Retransm itted NR PDCP SN Ind | Delivered Retransmit ted NR PDCP SN Ind | Cause Report | 1 |
| Desired buffer size for the data radio bearer | | | | | | | | 4 |
| Desired Data Rate | | | | | | | | 0 or 4 |
| Number of lost NR-U Sequence Number ranges reported | | | | | | | | 0 or 1 |
| Start of lost NR-U Sequence Number range | | | | | | | | 0 or (6* Number of reported lost NR-U SN ranges) |
| End of lost NR-U Sequence Number range | | | | | | | | |
| Highest successfully delivered NR PDCP Sequence Number | | | | | | | | 0 or 3 |
| Highest transmitted NR PDCP Sequence Number | | | | | | | | 0 or 3 |
| Cause Value | | | | | | | | 0 or 1 |
| Successfully delivered retransmitted NR PDCP Sequence Number | | | | | | | | 0 or 3 |
| Retransmitted NR PDCP Sequence Number | | | | | | | | 0 or 3 |
| Number of successfully delivered out of sequence PDCP Sequence Number range | | | | | | | | 0 or 1 |
| Start of successfully delivered out of sequence PDCP Sequence Number range | | | | | | | | 0 or (6* Number of successfully delivered out of sequence PDCP Sequence Number range) |
| End of successfully delivered out of sequence PDCP Sequence Number range | | | | | | | | |
| NR-U Sequence Number of Polling Frame | | | | | | | | 0 or 3 |
| Feedback Delay Result | | | | | | | | 0 or 4 |
| Padding | | | | | | | | 0-3 |

Table 3 is an example of the DL DATA DELIVERY STATUS (PDU Type 1) Format. The DDDS transmitted by the DU may be in the same form as the example in Table 3.

NOTE: Instead of the CU-CP informing the CU-UP in Step 5 of an indication (e.g., an indirect path indication) that a specific F1-U DL TNL address is related to an indirect path or a Relay UE, the following may be performed. For example, in Step 8, the DU may transmit a DDDS including information that data is being transmitted to the Remote UE through the Relay UE to the CU-UP. Accordingly, based on the information received in Steps 5 and 8, the CU-UP may recognize that the same bearer is connected to two RLCs and one of them is an indirect path. Accordingly, the CU-UP may perform the operation of Step 9.

Step 9: Based on the information received in Step 8, the CU-UP may handle the PDCP PDU.

(CASE 1) For example, unlike the prior art, for a DU that has transmitted a DDDS related to an F1-U UL Transport Network Layer (TNL) address allocated for an indirect path, the CU-UP may not transmit information instructing the DU to delete successfully transmitted DL data packets. For example, the CU-UP may not perform an operation of instructing DU1 to delete a DL data packet having a PDCP Sequence Number (SN) identical to a Highest successfully delivered NR PDCP Sequence Number and/or a Number of successfully delivered out of sequence PDCP Sequence Number range included in the DDDS transmitted by DU2 through the F1-U UL TNL address allocated for the indirect path in Step 6.

When the operation related to Case 1 is performed, even if the Relay UE fails to transmit the DL data on the PC5 link of the indirect path, the Remote UE may receive the data through the direct path.

(CASE 2) Conversely, for a DU that has transmitted a DDDS related to an F1-U UL TNL address allocated for a direct path, the CU-UP may transmit information instructing the DU to delete successfully transmitted DL data packets. For example, the CU-UP may instruct DU2 to delete a DL data packet having a PDCP SN identical to a Highest successfully delivered NR PDCP Sequence Number and/or a Number of successfully delivered out of sequence PDCP Sequence Number range included in the DDDS delivered by DU1 through the F1-U UL TNL address allocated for the direct path.

For example, Case 2 may be executed if the DDDS is received first from the direct link. Conversely, Case 1 may be executed if the DDDS is received first from the indirect path.

Alternatively, Case 2 may be executed if the primary path is set as the direct link, and Case 1 may be executed if the primary path is set as the indirect path. However, even in this case, if the DDDS is received first from a link other than the primary path, the Case 1 or Case 2 operation may be executed depending on whether the primary path is the direct link or the indirect link.

NOTE: For reference, if DU1 and DU2 are the same, the CU-UP may operate as in CASE 1 above for the DDDS delivered by the DU through the F1-U UL TNL address allocated for the indirect path in Step 6. Conversely, for the DDDS delivered by the DU through the F1-U UL TNL address allocated for the direct path, the CU-UP may operate as in CASE 2 above.

### 2. The second example of the present disclosure

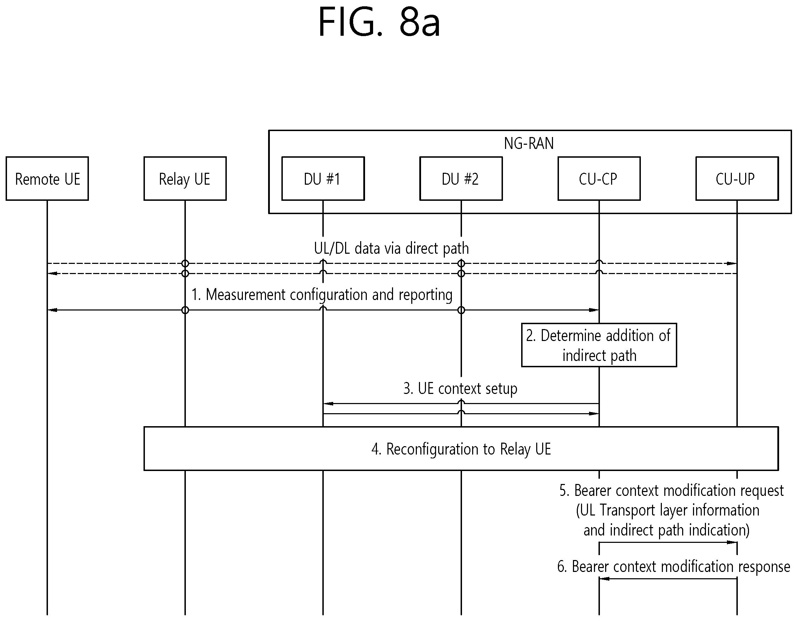

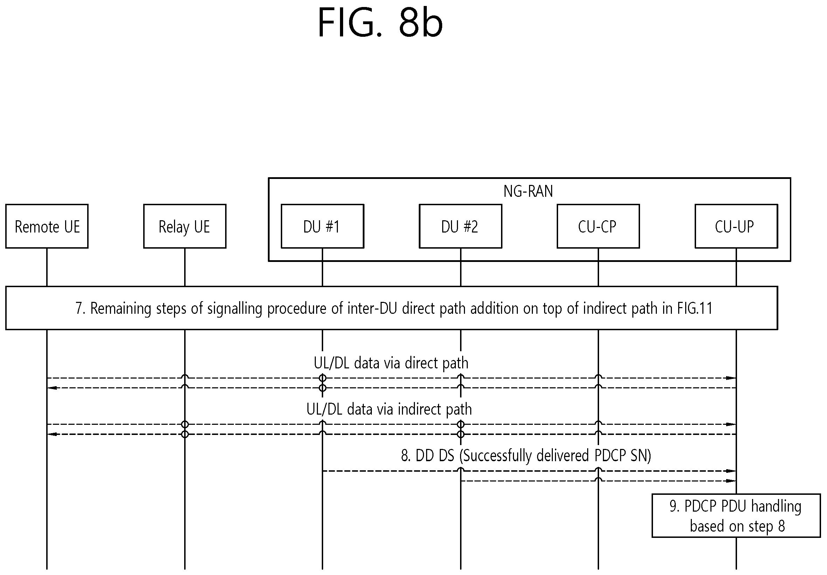

Hereinafter, the second example of the present disclosure related to a direct path addition will be described with reference to FIGS. 8a and 8b.

The following drawings are prepared to describe specific examples of the present specification. Since specific device names or specific signal/message/field names described in the drawings are presented as examples, the technical features of the present specification are not limited to the specific names used in the following drawings.

**FIGS. 8a** **and** **8b** **show an example of a direct path addition procedure according to the second example of the present disclosure.**

FIGS. 8a and 8b show an example of providing an indirect path indication when an inter-DU direct path is additionally added to an indirect path.

In the example of FIGS. 8a and 8b, multi-path transmission may be performed by creating a direct path and an indirect path in each DU in an inter-DU situation. In this case, a CU-CP may inform a CU-UP of bearer and/or TNL address information related to the indirect path.

The example of FIGS. 8a and 8b assumes an inter-DU situation where a direct path and an indirect path are connected to DU1 and DU2, respectively, but this is merely an example. The second example of the present disclosure is also applicable to a case where DU1 and DU2 are the same.

Step 0: A Remote UE is in a state of being connected to an NG-RAN through a Relay UE and DU2. Therefore, the Remote UE may transmit and receive DL/UL data with the NG-RAN through the Relay UE and DU2 (i.e., through an indirect path).

NOTE: Instead of performing the operation of Step 5, in the process of creating the indirect path in Step 0, the CU-CP may transmit the information transmitted in Step 5 to the CU-UP. For example, the CU-CP may transmit to the CU-UP information indicating that multi-path transmission is required for the Remote UE, that an indirect path through a Relay UE should be created in advance in the CU-UP for the multi-path transmission, and/or information related to an F1-U DL TNL address associated with the indirect path.

Step 1: This may be performed in the same manner as Step 1 of FIGS. 7a and 7b.

Step 2: Based on the measurement results received in Step 1, the CU-CP may select a Uu cell capable of reaching the same NG-RAN. The CU-CP may decide to additionally create a direct path through the corresponding cell and transmit DL/UL data with the Remote UE through multi-path.

Step 3: The CU-CP may request the DU1 to UE context setup for the Remote UE and allocate resources for a Bearer by using a UE CONTEXT SETUP REQUEST message. After completing the UE context setup and resource allocation, the DU1 may respond to the CU-CP through a UE CONTEXT SETUP RESPONSE message including an F1-U DL TNL address.

NOTE: If DU1 and DU2 are the same, the CU-CP may perform a UE Context Modification procedure in Step 3.

Step 4: If some bearers being served through the Relay UE are changed to the direct path, or for reasons such as updating some QoS, the CU-CP, CU-UP, and DU may proceed with reconfiguration for the Relay UE in advance.

Step 5: The CU-CP may transmit a BEARER CONTEXT MODIFICATION REQUEST message to the CU-UP. For example, the BEARER CONTEXT MODIFICATION REQUEST message may include UP Transport Layer information and an Indirect Path Indication. For example, the Indirect Path Indication may inform the CU-UP that multi-path transmission is required for the Remote UE and provide information related to an F1-U DL TNL address associated with the indirect path.

NOTE: For reference, the CU-CP may also inform the CU-UP of information related to an F1-U DL TNL address associated with the direct path.

Step 6: Based on the information received in Step 5, the CU-UP may additionally allocate an F1-U UL TNL address for a newly created direct path for the multi-path transmission of the Remote UE. The CU-UP may transmit a BEARER CONTEXT MODIFICATION RESPONSE message including the F1-U UL TNL address for the direct path to the CU-CP. The CU-UP may also update a previously allocated F1-U UL TNL address for the indirect path.

NOTE: The CU-CP may inform the CU-UP in Step 0 or Step 5 that a specific bearer of the Remote UE is associated with a specific Relay UE or an indirect path. In this case, based on the fact that the specific bearer of the Remote UE is associated with the specific Relay UE or the indirect path, the CU-UP may perform the operation of Step 6.

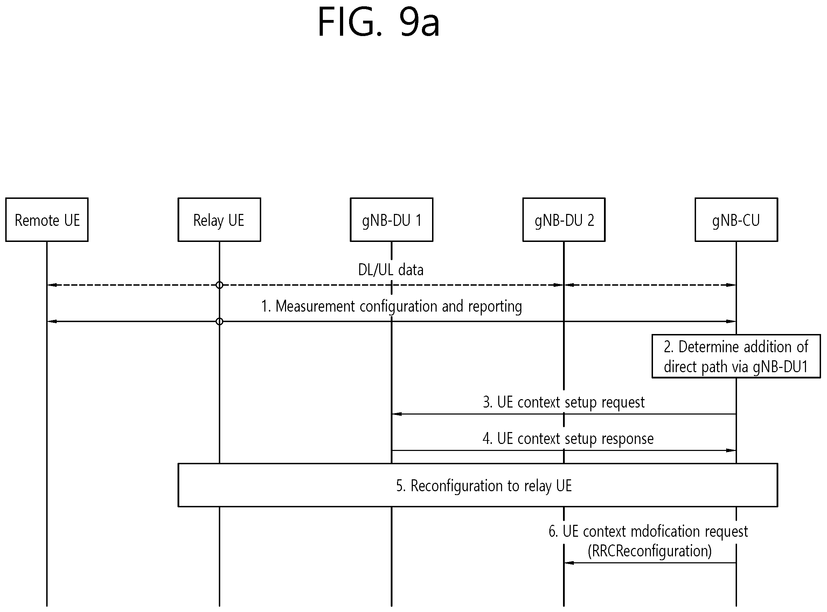

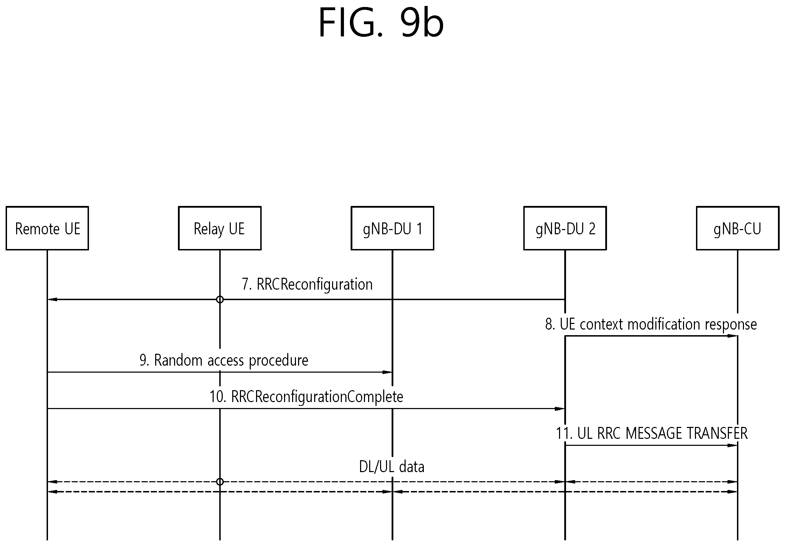

Step 7: Among the "Signalling procedure of inter-DU direct path addition on top of indirect path" according to the examples of FIGS. 9a and 9b, the remaining steps are performed.

The Remote UE and the NG-RAN may transmit and receive DL/UL data using both the direct path through the Uu link and the indirect path through the Relay UE.

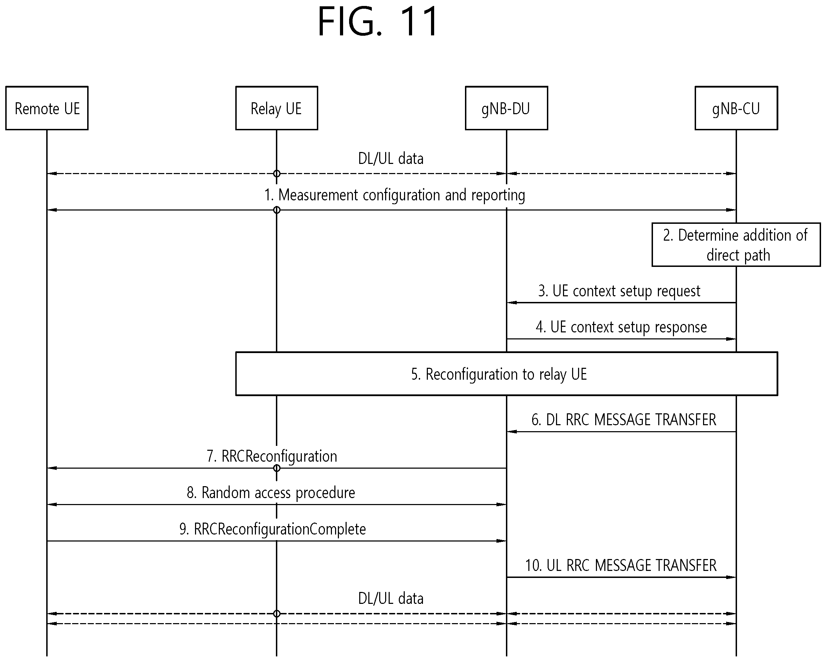

NOTE: If DU1 and DU2 are the same, the remaining steps among the "Signalling procedure of intra-DU direct path addition on top of indirect path" of FIG. 11 may be performed.

Step 8: This may be performed in the same manner as Step 8 of FIGS. 7a and 7b.

In Step 8, Table 3, which is an example of the DL DATA DELIVERY STATUS (PDU Type 1) Format, may be used.

NOTE: Instead of the CU-CP informing the CU-UP in Step 0 or Step 5 of an indication (e.g., an indirect path indication) that a specific F1-U DL TNL address is related to an indirect path or a Relay UE, the following may be performed. For example, in Step 8, the DU may transmit a DDDS including information that data is being transmitted to the Remote UE through the Relay UE to the CU-UP. Accordingly, based on the information received in Step 5 and Step 8, the CU-UP can recognize that the same bearer is connected to two RLCs and one of them is an indirect path. Accordingly, the CU-UP may perform the operation of Step 9.

Step 9: Based on the information received in Step 8, the CU-UP may handle the PDCP PDU.

(CASE 1) For example, unlike the prior art, for a DU that has transmitted a DDDS related to an F1-U UL Transport Network Layer (TNL) address allocated for an indirect path, the CU-UP may not transmit information instructing the DU to delete successfully transmitted DL data packets. For example, the CU-UP may not perform an operation of instructing DU1 to delete a DL data packet having a PDCP SN identical to a Highest successfully delivered NR PDCP Sequence Number and/or a Number of successfully delivered out of sequence PDCP Sequence Number range included in the DDDS delivered by DU2 through the F1-U UL TNL address allocated for the indirect path in Step 6.

When the operation related to Case 1 is performed, even if the Relay UE fails to transmit the DL data on the PC5 link of the indirect path, the Remote UE can receive the data through the direct path.

(CASE 2) Conversely, for a DU that has transmitted a DDDS related to an F1-U UL TNL address allocated for a direct path, the CU-UP may transmit information instructing the DU to delete successfully transmitted DL data packets. For example, the CU-UP may instruct DU2 to delete a DL data packet having a PDCP SN identical to a Highest successfully delivered NR PDCP Sequence Number and/or a Number of successfully delivered out of sequence PDCP Sequence Number range included in the DDDS delivered by DU1 through the F1-U UL TNL address allocated for the direct path.

For example, Case 2 may be executed if the DDDS is received first from the direct link. Conversely, Case 1 may be executed if the DDDS is received first from the indirect path.

Alternatively, Case 2 may be executed if the primary path is set as the direct link, and Case 1 may be executed if the primary path is set as the indirect path. However, even in this case, if the DDDS is received first from a link other than the primary path, the Case 1 or Case 2 operation may be executed depending on whether the primary path is the direct link or the indirect link.

NOTE: For reference, if DU1 and DU2 are the same, the CU-UP may operate as in CASE 1 above for the DDDS delivered by the DU through the F1-U UL TNL address allocated for the indirect path in Step 6. Conversely, for the DDDS delivered by the DU through the F1-U UL TNL address allocated for the direct path, the CU-UP may operate as in CASE 2 above.

### 3. The third example of the present disclosure

The third example of the present disclosure describes an example of a case where a multi-path is changed to a single path. While both a direct path and an indirect path were being used, only the indirect path or only the direct path may be used.

While the Remote UE is transmitting data through multi-path, the transmission may be switched to single-path transmission by releasing either the direct path or the indirect path. In this case, the CU-CP may inform the CU-UP that the transmission is switched to single-path transmission by explicitly transmitting a BEARER CONTEXT MODIFICATION REQUEST message to the CU-UP. In this case, the CU-UP can recognize that it no longer needs to perform the operations described with reference to Step 9 of FIGS. 7a and 7b or Step 9 of FIGS. 8a and 8b.

NOTE: The CU-CP may inform the CU-UP of the fact that the Remote UE is to switch to single-path transmission by releasing the direct path or the indirect path while transmitting data through multi-path in the following manner. For example, the CU-CP may implicitly inform the CU-UP that a single-path is used by including only a DL TNL address related to the single-path in the BEARER CONTEXT MODIFICATION REQUEST message. For example, for a bearer to which multi-path was applied, two DL TNL addresses (i.e., a DL TNL address for a direct path and a DL TNL address for an indirect path) may not be included in the BEARER CONTEXT MODIFICATION REQUEST message, and only one DL TNL address may be included. In this case, the CU-UP may recognize that the transmission for the Remote UE has been switched to single-path transmission.

Hereinafter, various examples to which the disclosure of the present specification is applied or implemented will be described.

The fourth example of the disclosure of the present specification describes a specific example to which at least one of the first to third examples of the disclosure of the present specification is applied.

### 4. The fourth example of the present disclosure

Detailed methods for supporting multi-path will be described.

The impact on PDCP duplication will be explained.

In legacy PDCP duplication, a node (e.g., DU) transmits a DDDS frame including a successfully delivered PDCP SN to a node hosting a PDCP entity (e.g., CU-UP). Then, the node hosting the NR PDCP entity (e.g., CU-UP) decides whether to discard the PDCP PDU and requests the discard of the duplicated PDCP PDU by delivering DL USER DATA to the corresponding node. Generally, this mechanism can also be reused for multi-path operations.

In the packet duplication of Scenario 1, the PDCP entity does not need to indicate to the Uu RLC entity to discard the PDCP PDU when the PC5 RLC entity informs of the successful transmission of the PDCP PDU. For example, even if a DDDS including a successfully delivered PDCP SN is provided from a node of the indirect path (e.g., a DU related to the indirect path), the node hosting the PDCP entity must not request the corresponding node of the direct path to discard the duplicated PDCP PDU. In the prior art, the gNB-CU-UP is not aware of which DRB is associated with the indirect path. Therefore, during the direct path addition or indirect path addition procedure, the gNB-CU-CP must inform the gNB-CU-UP of which DRB is associated with the indirect path.

Proposal: During the direct path addition or indirect path addition procedure, the gNB-CU-CP shall inform the gNB-CU-UP of the DRB associated with the indirect path.

Hereinafter, an Indirect Path Indicator, which is an example of the indirect path indication described in the present disclosure, will be explained. The Indirect Path Indicator may be provided as in the example below.

The CU-CP may transmit UP parameters to the CU-UP. For example, an Information Element (IE) as shown in the example of Table 4 below may provide information related to the DRB configured in the gNB-CU-UP.

**[Table 4]**

| IE/Group Name | Presence | Range | IE type and reference | Semantics description | Criticality | Assigned criticality |
|---|---|---|---|---|---|---|
| UP parameter list | | 1 | | | - | - |
| >UP parameter item | | 1..<maxnoofUP Parameters> | | | - | - |
| >>UP Transport Layer Information | M | | TS 37.483 V18.0.0 9.3.2.1 | | - | - |
| >>Indirect path indicator | O | | ENUMERATED (true, ...) | Indicates indirect path in multi-path operation | YES | ignore |

According to the example of Table 4, the CU-CP may transmit a UP parameter list. The UP parameter list may include UP parameter items. A UP parameter item may include UP Transport layer information and an Indirect Path Indicator. The Indirect Path Indicator indicates an indirect path in a multi-path operation.

For example, when the CU-CP transmits the Indirect Path Indicator to the CU-UP, the CU-UP can recognize the indirect path of the multi-path operation.

With reference to FIGS. 9a and 9b to FIG. 12, examples of procedures for supporting multi-path will be described.

With reference to FIGS. 9a and 9b, an example of an inter-DU direct path addition on top of an indirect path will be described.

The following drawings are prepared to describe specific examples of the present specification. Since specific device names or specific signal/message/field names described in the drawings are presented as examples, the technical features of the present specification are not limited to the specific names used in the following drawings.

**FIGS. 9a** **and** **9b** **are an example of inter-DU direct path addition according to an embodiment of the present disclosure.**

FIGS. 9a and 9b are examples of signal flows for inter-DU direct path addition. FIGS. 9a and 9b illustrate a signaling procedure for adding an inter-DU direct path on top of an indirect path.
1. Signaling for Uu measurement configuration and measurement reporting is performed between the Remote UE and the gNB-CU. Step 1 is performed to evaluate both relay link measurements and Uu link measurements. The Remote UE may report Uu measurement results of neighbor cells and one or several candidate Relay UEs.
2. The gNB-CU may decide to add a direct path for the Remote UE at another gNB-DU (i.e., gNB-DU1).
3. The gNB-CU may transmit a UE CONTEXT SETUP REQUEST message (including a direct path configuration) for the Remote UE to the gNB-DU1.
4. The gNB-DU1 responds to the gNB-CU with a UE CONTEXT SETUP RESPONSE message.
5. The gNB-CU transmits an RRCReconfiguration message to the Relay UE to update the indirect path configuration if necessary.
6. The gNB-CU transmits a UE CONTEXT MODIFICATION REQUEST message, including an RRCReconfiguration message for the Remote UE, to the gNB-DU2. The contents of the RRCReconfiguration message may include at least a direct path addition configuration, an RLC channel configuration, bearer mapping, and associated radio bearers.
7. The gNB-DU2 transmits the RRCReconfiguration message to the Remote UE.
8. The gNB-DU2 transmits a UE CONTEXT MODIFICATION RESPONSE message to the gNB-CU.
9. The Remote UE performs a random access procedure at the gNB-DU1.
10. The Remote UE transmits an RRCReconfigurationComplete message to the gNB-DU2 to complete the direct path addition procedure. In multi-path communication via an L2 U2N relay, the RRCReconfigurationComplete message may always be transmitted through the direct path (i.e., gNB-DU1) when adding/changing a path. In the case of a split SRB1 with PDCP duplication, the Remote UE may transmit the RRCReconfigurationComplete message to the gNB-CU through both paths.
10. The gNB-DU2 transmits a UL RRC MESSAGE TRANSFER message including the RRCReconfigurationComplete message to the gNB-CU.

With reference to FIGS. 10a and 10b, an example of an inter-DU indirect path addition on top of a direct path will be described.

The following drawings are prepared to describe specific examples of the present specification. Since specific device names or specific signal/message/field names described in the drawings are presented as examples, the technical features of the present specification are not limited to the specific names used in the following drawings.

**FIGS. 10a** **and** **10b** **are an example of inter-DU indirect path addition according to an embodiment of the present disclosure.**

FIGS. 10a and 10b are examples of signal flows for inter-DU indirect path addition. FIGS. 10a and 10b illustrate a signaling procedure for adding an inter-DU indirect path on top of a direct path.
1. This may be performed in the same manner as Step 1 of FIGS. 9a and 9b.
   Otherwise, the Remote UE is connected with the Relay UE using a non-3GPP link, and the Remote UE reports at least the C-RNTI of the Relay UE and the Cell ID of the serving Relay UE.
2. The gNB-CU decides to add an indirect path for the Remote UE through the Relay UE at another gNB-DU (i.e., gNB-DU2).
3. If the Relay UE is in an RRC_CONNECTED state, reconfiguration for the Relay UE is performed among the Relay UE, gNB-DU2, and gNB-CU. The gNB-CU transmits an RRCReconfiguration message to the Relay UE. If the Relay UE is in an RRC_IDLE/INACTIVE state, this step is omitted.
4. The gNB-CU transmits a UE CONTEXT SETUP REQUEST message for the Remote UE, including at least an indirect path configuration, to the gNB-DU2.
5. The gNB-DU2 responds to the gNB-CU with a UE CONTEXT SETUP RESPONSE message.
6. The gNB-CU transmits a UE CONTEXT MODIFICATION REQUEST message (or DL RRC MESSAGE TRANSFER), including an RRCReconfiguration message for the Remote UE, to the gNB-DU1. The contents of the RRCReconfiguration message may include at least a direct path addition configuration, an RLC channel configuration, bearer mapping, and associated radio bearers.
7. The gNB-DU1 transmits the RRCReconfiguration message to the Remote UE.
8. If the Remote UE using a sidelink does not have a PC5 connection with the target Relay UE, the Remote UE establishes a PC5 connection with the Relay UE. If the Remote UE uses a non-3GPP link, this step is omitted.
9. The Remote UE may transmit an RRCReconfigurationComplete message to the gNB-DU1 to complete the indirect path addition procedure. If the U2N Relay UE is in an RRC_IDLE/RRC_INACTIVE state, when a PC5-RRC message is received from the U2N Remote UE, an RRC setup/resume procedure for the U2N Relay UE to enter the RRC_CONNECTED state is triggered first. In the case of a split SRB1 with PDCP duplication, the RRCReconfigurationComplete message may trigger the RRC setup/resume procedure of the U2N Relay UE, allowing the U2N Relay UE to enter the RRC_CONNECTED state.
10. The gNB-DU1 transmits a UL RRC MESSAGE TRANSFER message including the RRCReconfigurationComplete message to the gNB-CU.

With reference to FIG. 11, an example of an intra-DU direct path addition on top of an indirect path will be described.

The following drawings are prepared to describe specific examples of the present specification. Since specific device names or specific signal/message/field names described in the drawings are presented as examples, the technical features of the present specification are not limited to the specific names used in the following drawings.

**FIG. 11** **is an example of intra-DU direct path addition according to an embodiment of the present disclosure.**

**FIG. 11** is an example of a signal flow for intra-DU direct path addition. **FIG. 11** illustrates a signaling procedure for adding an intra-DU direct path on top of an indirect path.
1. This may be performed in the same manner as Step 1 of **FIGS. 9a** **and** **9b**.
2. The gNB-CU decides to add a direct path for the Remote UE at the same gNB-DU.
3. The gNB-CU transmits a UE CONTEXT MODIFICATION REQUEST message, including at least a direct path configuration, for the Remote UE to the gNB-DU.
4. The gNB-DU responds to the gNB-CU with a UE CONTEXT MODIFICATION RESPONSE message.
5. The gNB-CU transmits an RRCReconfiguration message to the Relay UE to update the indirect path configuration if necessary.
6. The gNB-CU transmits a DL RRC MESSAGE TRANSFER message, including an RRCReconfiguration message for the Remote UE, to the gNB-DU. The contents of the RRCReconfiguration message may include at least a direct path addition configuration, an RLC channel configuration, bearer mapping, and associated radio bearers.
7. The gNB-DU transmits the RRCReconfiguration message to the Remote UE.
8. The Remote UE performs a random access procedure at the gNB-DU.
9. The Remote UE may transmit an RRCReconfigurationComplete message to the gNB-DU to complete the direct path addition procedure. In multi-path communication via an L2 U2N relay, the RRCReconfigurationComplete message is always transmitted through the direct path when adding/changing a path. In the case of a split SRB1 with PDCP duplication, the Remote UE may transmit the RRCReconfigurationComplete message to the gNB-CU through both paths.
10. The gNB-DU transmits a UL RRC MESSAGE TRANSFER message including the RRCReconfigurationComplete message to the gNB-CU.

With reference to **FIG. 12**, an example of an intra-DU indirect path addition on top of a direct path will be described.

The following drawings are prepared to describe specific examples of the present specification. Since specific device names or specific signal/message/field names described in the drawings are presented as examples, the technical features of the present specification are not limited to the specific names used in the following drawings.

**FIG. 12** **is an example of intra-DU indirect path addition according to an embodiment of the present disclosure.**

FIG. 12 is an example of a signal flow for intra-DU indirect path addition. FIG. 12 illustrates a signaling procedure for adding an intra-DU indirect path on top of a direct path.
1. This may be performed in the same manner as Step 1 of FIGS. 10a and 10b.
2. The gNB-CU decides to add an indirect path to the Remote UE related to the same gNB-DU through the Relay UE.
3. If the Relay UE is in an RRC_CONNECTED state, reconfiguration for the Relay UE is performed among the Relay UE, gNB-DU, and gNB-CU. The gNB-CU transmits an RRCReconfiguration message to the Relay UE. If the Relay UE is in an RRC_IDLE/INACTIVE state, this step is omitted.
4. The gNB-CU transmits a UE CONTEXT MODIFICATION REQUEST message, including at least an indirect path configuration, for the Remote UE to the gNB-DU.
5. The gNB-DU responds to the gNB-CU with a UE CONTEXT MODIFICATION RESPONSE message.
6. The gNB-CU transmits a DL RRC MESSAGE TRANSFER message, including an RRCReconfiguration message for the Remote UE, to the gNB-DU. The contents of the RRCReconfiguration message may include at least an indirect path addition configuration, a PC5 RLC channel configuration for relay traffic, bearer mapping, and associated radio bearers.
7. The gNB-DU transmits the RRCReconfiguration message to the Remote UE.
8. If the Remote UE using a sidelink does not have a PC5 connection with the target Relay UE, the Remote UE establishes a PC5 connection with the Relay UE. If the Remote UE uses a non-3GPP link, this step is omitted.
9. The Remote UE may transmit an RRCReconfigurationComplete message to the gNB-DU to complete the indirect path addition procedure. If the U2N Relay UE is in an RRC_IDLE/RRC_INACTIVE state, when a PC5-RRC message is received from the U2N Remote UE, an RRC setup/resume procedure for the U2N Relay UE to enter the RRC_CONNECTED state is triggered first. In the case of a split SRB1 with PDCP duplication, the RRCReconfigurationComplete message may trigger the RRC setup/resume procedure of the U2N Relay UE, allowing the U2N Relay UE to enter the RRC_CONNECTED state.
10. The gNB-DU transmits a UL RRC MESSAGE TRANSFER message including the RRCReconfigurationComplete message to the gNB-CU.

### 5. The fifth example of the present disclosure

A specific example of a method for supporting multi-path will be described.

The fifth example of the present disclosure may be applied to the following case.

For example, the CU-CP may transmit a BEARER CONTEXT MODIFICATION REQUEST message to the CU-UP. The CU-UP may transmit a BEARER CONTEXT MODIFICATION RESPONSE message to the CU-CP. When such operations are performed, the fifth example of the present disclosure may be applied.

The operation according to the fifth example of the present disclosure may be combined with at least one of the first to fourth examples described above. The BEARER CONTEXT MODIFICATION REQUEST message may include a DRB To Modify List IE. The DRB To Modify List IE may include a PDCP configuration IE. The PDCP configuration IE may include a PDCP Duplication IE or an additional PDCP duplication information IE.

The DRB To Modify List IE may include a DL UP Parameters IE. The DL UP Parameters IE may include an Indirect Path Indication IE. The indirect path indication may be used for an L2 U2N Remote UE and an L2 Multi-Path (MP) Remote UE using a PC5 link.

The CU-CP may transmit a BEARER CONTEXT MODIFICATION REQUEST message to the CU-UP. The BEARER CONTEXT MODIFICATION REQUEST message may include both a PDCP Duplication IE and an Indirect Path Indication IE. In this case, the CU-UP may recognize the UP TNL information associated with the Indirect Path Indication IE as an indirect path in a multi-path situation. Based on a DDDS received from a path based on the UP TNL information (e.g., the indirect path), the CU-UP may not transmit a command to the DU on the direct path side to delete duplicated PDCP PDUs.

For example, a PDCP Duplication IE or an additional PDCP Duplication information IE may be included in a PDCP Configuration IE, and an Indirect Path Indication IE may be included in a DL UP Parameters IE of the BEARER CONTEXT MODIFICATION REQUEST message. In this case, for a UP Transport Layer Information IE that does not have an Indirect Path Indication IE, the gNB-CU-UP may not request the discard of duplicated DL data. That is, in this case, even if a DDDS is received from the DU, the gNB-CU-UP may not request the DU related to the direct path (e.g., the DU related to the UP Transport Layer Information IE without the Indirect Path Indication IE) to discard the duplicated DL data.

For reference, the Indirect Path Indication IE may be an IE for the CU-CP to inform the CU-UP of a situation where a single indirect path exists. Upon receiving the Indirect Path Indication IE from the CU-CP, the CU-UP may perform an operation for a DL lossless Handover (HO).

For reference, the Indirect Path Indication IE of the fifth example of the present disclosure described in the immediately preceding paragraph may be an Indirect Path Indication IE according to the prior art. Meanwhile, the Indirect Path Indication IE of the fifth example of the present disclosure may be replaced with the indirect path indication newly defined in the first to fourth examples of the present disclosure. That is, based on the indirect path indication newly defined in the first to fourth examples of the present disclosure, the operations described in the fifth example of the present disclosure may be performed.

For example, the CU-UP may receive a BEARER CONTEXT MODIFICATION REQUEST message that includes only an Indirect Path Indication IE without a PDCP Duplication IE. In this case, the CU-UP may perform a DL lossless handover in a single indirect path situation.

In another example, the CU-UP may receive a BEARER CONTEXT MODIFICATION REQUEST message including both a PDCP Duplication IE and an Indirect Path Indication IE. In this case, the CU-CP may inform the CU-UP of which UP TNL information is associated with the indirect path in a multi-path situation. Then, for a UP Transport Layer Information IE that does not have an Indirect Path Indication IE, the gNB-CU-UP may not request the discard of duplicated DL data. That is, in this case, even if a DDDS is received from the DU, the gNB-CU-UP may not request the DU related to the direct path (e.g., the DU related to the UP Transport Layer Information IE without the Indirect Path Indication IE) to discard the duplicated DL data.

In addition, the fifth example of the present disclosure may also be applied to a bearer context setup procedure based on Figure 8.9.2-1 of TS 38.401 V18.3.0.

For example, the following operations may be performed in the bearer context setup procedure.
0. Bearer context setup may be triggered in the gNB-CU-UP.
1. The gNB-CU-UP may transmit a BEARER CONTEXT SETUP REQUEST message to the gNB-CU-CP.
2. The gNB-CU-CP may transmit a BEARER CONTEXT SETUP RESPONSE message to the gNB-CU-UP.
3. The gNB-DU and the gNB-CU-CP may perform an F1 UE context setup procedure.
4. The gNB-CU-CP may transmit a BEARER CONTEXT MODIFICATION REQUEST message to the gNB-CU-UP. The DU may also transmit uplink user data to the gNB-CU-UP.

In Step 4, the fifth example of the present disclosure may be applied as follows.

If information related to PDCP duplication is not included in the BEARER CONTEXT MODIFICATION REQUEST message while an indirect path indication is included, the gNB-CU-UP may not delete DL data according to a Downlink Data Delivery Status frame received from the gNB-DU. If both PDCP duplication and the indirect path indication are received in Step 4, the gNB-CU-UP may not request the RLC entity for the direct path to discard duplicated DL data based on the Downlink Data Delivery Status frame received from the RLC entity for the indirect path.

5. The gNB-CU-UP may transmit a BEARER CONTEXT MODIFICATION RESPONSE message to the gNB-CU-CP. The gNB-CU-UP may also transmit downlink user data to the DU.

The following drawings are prepared to describe specific examples of the present specification. Since specific device names or specific signal/message/field names described in the drawings are presented as examples, the technical features of the present specification are not limited to the specific names used in the following drawings.

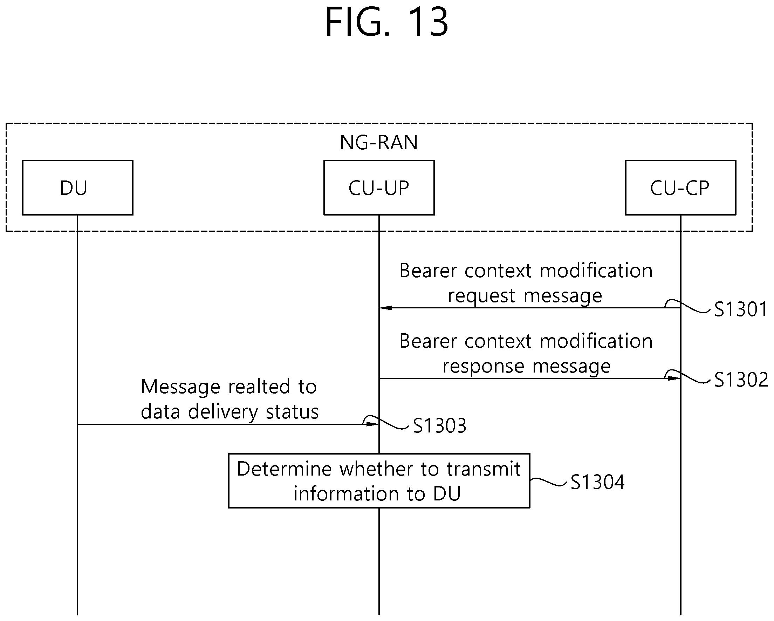

**FIG. 13** **shows an example of a procedure according to an embodiment of the present disclosure.**

For reference, the procedure shown in FIG. 13 is merely an example, and the scope of the present disclosure is not limited by the example of FIG. 13.

For example, the operations described in the examples of FIGS. 1 to 12 may also be applied to the example of FIG. 13. For example, even for operations or contents not directly described in the example of FIG. 13, the operations or contents described in various examples of the present disclosure may be applied.

The DU, CU-UP, and CU-CP may be included in one NG-RAN. The DU may be referred to as a gNB-DU, the CU-UP as a gNB-CU-UP, and the CU-CP as a gNB-CU-CP.

In step S1301, the CU-CP may transmit a BEARER CONTEXT MODIFICATION REQUEST message to the CU-UP.

For example, the BEARER CONTEXT MODIFICATION REQUEST message may include information related to a multi-path operation and an indirect path indication.

For example, the indirect path indication may include F1-U Downlink Transport Network Layer (F1-U DL TNL) address information associated with the indirect path.

For example, based on the BEARER CONTEXT MODIFICATION REQUEST message, the CU-UP may allocate an F1-U UL TNL address for the indirect path.

In step S1302, the CU-UP may transmit a BEARER CONTEXT MODIFICATION RESPONSE message to the CU-CP.

In step S1303, the DU may transmit a message related to a data delivery status to the CU-UP. For example, the message related to the data delivery status may refer to a DDDS frame.

In step S1304, the CU-UP may determine whether to transmit information to the DU.

For example, the CU-UP may determine whether to transmit information for discarding downlink data related to the DDDS frame to the DU.

For example, based on a determination not to transmit the information for discarding the downlink data, the information for discarding the downlink data may not be transmitted to the DU.

For example, based on the fact that the DDDS frame is related to the F1-U UL TNL address for the indirect path, the CU-UP may decide not to transmit the information for discarding the downlink data.

For example, the information for discarding downlink data may be information instructing the discard of a downlink data packet associated with a PDCP sequence number identical to the "successfully delivered PDCP sequence" included in the DDDS frame.

For example, based on the fact that the DDDS frame is related to the F1-U UL TNL address for the indirect path, the CU-UP may decide whether to transmit the information for discarding the downlink data.

According to an embodiment of the present disclosure, in a multi-path transmission situation, the CU-CP may inform the CU-UP of a bearer and/or a TNL address associated with the indirect path.

For example, the CU-CP may inform the CU-UP that a multi-path for the Remote UE has been created and/or allocated during the Bearer Context Setup or Bearer Context Modification process for the Remote UE. Additionally, the CU-CP may inform the CU-UP of the bearer and/or TNL address associated with the indirect path.

For example, based on the information received from the CU-CP and the DU, the CU-UP may not transmit a command to the DU associated with the direct path to delete the DL data that was successfully transmitted to the Relay UE through the indirect path.

The operations of the drawings based on the various examples described above may be performed individually or in combination with the operations of other drawings.

The aforementioned drawings may be implemented individually or in conjunction with other drawings. Furthermore, the drawings may also be applied to indirect path change situations or direct path change situations.

The present disclosure can provide various effects.

For example, according to the disclosure of this specification, the CU-UP can distinguish between data transmitted through a direct path and data transmitted through an indirect path in a multi-path situation. For example, even when the CU-UP receives an acknowledgment (ACK) from the DU for DL data transmitted through the indirect path, it may not command the DU associated with the direct path to delete the copy of the same DL data packet. For the Remote UE, effective communication can be supported. For example, from the perspective of the Remote UE, even if the Relay UE fails to transmit the DL data on the PC5 link of the indirect path, the Remote UE can still receive it through the direct path.

The effects that may be obtained from the specific examples of the present disclosure are not limited to those listed above. For example, there may be a variety of technical effects that a person having ordinary skill in the related art may understand or infer from the present disclosure. Accordingly, the specific effects of the present disclosure are not limited to those expressly set forth herein, but may include a variety of effects that may be understood or inferred from the technical features of the present disclosure.

For reference, the operation of the terminal (e.g., UE, remote UE, relay UE) described in the present specification may be implemented by the apparatus of FIGS. 1 to 4 described above. For example, the terminal (e.g., UE, remote UE, relay UE) may be the first device 100 or the second device 200 of FIG. 2. For example, an operation of a terminal (e.g., UE, remote UE, relay UE) described herein may be processed by one or more processors 102 or 202 . The operation of the terminal described herein may be stored in one or more memories 104 or 204 in the form of an instruction/program (e.g., instruction, executable code) executable by one or more processors 102 or 202 . One or more processors 102 or 202 control one or more memories 104 or 204 and one or more transceivers 105 or 206, and may perform the operation of the terminal (e.g., UE, remote UE, relay UE) described herein by executing instructions/programs stored in one or more memories 104 or 204.

In addition, instructions for performing an operation of a terminal (e.g., UE, remote UE, relay UE) described in the present disclosure of the present specification may be stored in a non-volatile computer-readable storage medium in which it is recorded. The storage medium may be included in one or more memories 104 or 204 . And, the instructions recorded in the storage medium may be executed by one or more processors 102 or 202 to perform the operation of the terminal (e.g., UE, remote UE, relay UE) described in the present disclosure of the present specification.

For reference, the operation of a network node (e.g., AMF, SMF, UPF, PCF, NEF, UDM, DN, etc.) or base station (e.g., NG-RAN, gNB, gNB-DU, gNB-CU, DU, CU-UP, CU-CP, etc.) described herein may be implemented by the apparatus of FIGS. 1 to 3 to be described below. For example, a network node or a base station may be the first device 100 of FIG.2 or the second device 200 of FIG.2. For example, the operation of a network node or base station described herein may be processed by one or more processors 102 or 202. The operation of the terminal described herein may be stored in one or more memories 104 or 204 in the form of an instruction/program (e.g., instruction, executable code) executable by one or more processors 102 or 202. One or more processors 102 or 202 may perform the operation of a network node or a base station described herein, by controlling one or more memories 104 or 204 and one or more transceivers 106 or 206 and executing instructions/programs stored in one or more memories 104 or 204.

In addition, instructions for performing the operation of the network node or base station described in the present disclosure of the present specification may be stored in a non-volatile (or non-transitory) computer-readable storage medium. The storage medium may be included in one or more memories 104 or 204. And, the instructions recorded in the storage medium are executed by one or more processors 102 or 202, so that the operations of a network node or base station are performed.

In the above, preferred embodiments have been exemplarily described, but the present disclosure of the present specification is not limited to such specific embodiments, and thus, modifications, changes, or may be improved.

In the exemplary system described above, the methods are described on the basis of a flowchart as a series of steps or blocks, but are not limited to the order of the steps described, some steps may occur in a different order or concurrent with other steps as described above. In addition, those skilled in the art will understand that the steps shown in the flowchart are not exclusive and that other steps may be included or that one or more steps of the flowchart may be deleted without affecting the scope of rights.

The claims described herein may be combined in various ways. For example, the technical features of the method claims of the present specification may be combined and implemented as an apparatus, and the technical features of the apparatus claims of the present specification may be combined and implemented as a method. In addition, the technical features of the method claim of the present specification and the technical features of the apparatus claim may be combined to be implemented as an apparatus, and the technical features of the method claim of the present specification and the technical features of the apparatus claim may be combined and implemented as a method.

## Claims

1. A method comprising:
receiving, from a Central Unit - Control Plane (CU-CP), a bearer context modification request message,
wherein the bearer context modification request message includes information related to a multi-path operation and an indirect path indication;
transmitting, to the CU-CP, a bearer context modification response message;
receiving, from a Distributed Unit (DU), a Downlink Data Delivery Status (DDDS) frame; and
determining whether to transmit information for discarding downlink data related to the DDDS frame to the DU.

2. The method of claim 1,
based on the information for discarding the downlink data is determined to be not transmitted, the information for discarding the downlink data is not transmitted to the DU.

3. The method of claim 1 or 2,
wherein the indirect path indication includes F1-U Downlink Transport Network Layer (F1-U DL TNL) address information related to an indirect path.

4. The method of any one of claims 1 to 3, further comprising:
allocating an F1-U UL TNL address for the indirect path based on the bearer context modification request message.

5. The method of any one of claims 1 to 4,
wherein, based on the DDDS frame being related to an F1-U UL TNL address for the indirect path, the information for discarding the downlink data is determined to be not transmitted.

6. The method of any one of claims 1 to 5,
wherein the information for discarding the downlink data is information instructing to discard a downlink data packet related to a PDCP sequence number identical to a PDCP sequence number related to a successfully delivered Packet Data Convergence Protocol (PDCP) sequence included in the DDDS frame.

7. The method of any one of claims 1 to 6,
wherein, based on the DDDS frame being related to an F1-U UL TNL address for a direct path, the information for discarding the downlink data is determined to be transmitted.

8. The method of any one of claims 1 to 7,
wherein, based on the bearer context modification request message including both the indirect path indication and information related to PDCP duplication, the information for discarding the downlink data is determined to be not transmitted.

9. An apparatus comprising:
at least one transceiver;
at least one processor; and
at least one computer memory operably connectable to the at least one processor and storing instructions that, based on being executed by the at least one processor, perform operations comprising: the method of any one of claims 1 to 8.

10. A method comprising:
transmitting, to a Central Unit - User Plane (CU-UP), a bearer context modification request message,
wherein the bearer context modification request message includes information related to a multi-path operation and an indirect path indication; and
receiving, from the CU-UP, a bearer context modification response message,
wherein the indirect path indication is used by the CU-UP, upon receiving a Downlink Data Delivery Status (DDDS) frame from a Distributed Unit (DU), to determine whether to transmit information for discarding downlink data related to the DDDS frame to the DU.

11. In the method of claim 10,
wherein the indirect path indication includes F1-U Downlink Transport Network Layer (F1-U DL TNL) address information related to an indirect path.

12. An apparatus comprising:
at least one transceiver;
at least one processor; and
at least one computer memory operably connectable to the at least one processor and storing instructions that, based on being executed by the at least one processor, perform operations comprising: the method of any one of claims 10 or claim 11.
